(19) Europäisches Patentamt
European Patent Office
Office européen des brevets

(11) **EP 4 770 092 A1**

(12) **EUROPEAN PATENT APPLICATION**
published in accordance with Art. 153(4) EPC

(43) Date of publication:
**01.07.2026 Bulletin 2026/27**

(21) Application number: **23953719.4**

(22) Date of filing: **28.09.2023**

(51) International Patent Classification (IPC):
**H04N 19/186** *(2014.01)*

(52) Cooperative Patent Classification (CPC):
**H04N 19/186**

(86) International application number:
**PCT/CN2023/122754**

(87) International publication number:
**WO 2025/065572 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Transsion Holdings Co., Ltd.**
**Shenzhen, Guangdong 518057 (CN)**

(72) Inventors:
• **LIU, Yutian**
**Shenzhen, Guangdong 518057 (CN)**
• **HUO, Yongkai**
**Shenzhen, Guangdong 518057 (CN)**

(74) Representative: **Osterhoff, Utz et al**
**Bockermann Ksoll**
**Griepenstroh Osterhoff**
**Patentanwälte**
**Bergstraße 159**
**44791 Bochum (DE)**

(54) **IMAGE PROCESSING METHOD, SMART TERMINAL, AND STORAGE MEDIUM**

(57) The present application provides an image processing method, a processing device, and a storage medium. The image processing method can be applied to the processing device, and includes: determining or obtaining a second pixel of a first component and/or a second pixel of a second component based on a first pixel of the first component of a current image block. The technical solution of the present application can reduce the distortion effect that occurs when predicting pixels in the current image block, thereby improving the accuracy of the prediction results for the luma component or the chroma component of the current image block.

determining or obtaining the second pixel of the first component and/or the second pixel of the second component based on the first pixel of the first component of the current image block ⎯ S10

FIG. 7

**Description**

**TECHNICAL FIELD**

The present application relates to the technical field of image processing, and in particular to an image processing method, a smart terminal and a storage medium.

**BACKGROUND**

In the development of video encoding and decoding, various encoding and decoding standards have made improvements to enhance video encoding and decoding effects from different aspects. Predicting luma components or chroma components of an image during the video encoding and decoding process is also an active area of research.

However, during the design and implementation of the present application, the inventors have discovered that there are at least the following problems: in some implementations, predicting the luma component or the chroma component of the current image block is based on pixels in the reference region. Therefore, when the features of the current image block and the reference region differ significantly, the prediction of pixels in the current image block can be distorted, thus reducing the accuracy of the prediction results for the luma component or the chroma component of the current image block.

The preceding description is intended to provide general background information and does not necessarily constitute prior art.

**SUMMARY**

To address the above technical problem, the present application provides an image processing method, a smart terminal, and a storage medium that can reduce the distortion effect that occurs when predicting pixels in the current image block, thereby improving the accuracy of the prediction results of the luma component or chroma component of the current image block.

The present application provides an image processing method, which can be applied to a processing device (such as a smart terminal or a server), including:

determining or obtaining a second pixel of a first component and/or a second pixel of a second component based on a first pixel of a first component of a current image block.

Optionally, the method further includes at least one of the following:

determining or obtaining the second pixel based on at least one of the following: a downsampling model, a non-downsampling model, a gradient model, a convolutional prediction model, and a linear prediction model, and the first pixel, the second pixel is the second pixel of the first component and/or the second pixel of the second component; and

determining or obtaining the second pixel based on the first pixel and filter coefficients, the second pixel is the second pixel of the first component and/or the second pixel of the second component.

Optionally, a method for determining the filter coefficients includes at least one of the following:

a first method: determining the filter coefficients based on a first reconstructed pixel of the first component, and a second reconstructed pixel of the first component and/or a second reconstructed pixel of the second component;

a second method: determining the filter coefficients based on a first reconstructed pixel of the first component, and a second predicted pixel of the first component and/or a second predicted pixel of the second component; and

a third method: determining the filter coefficients based on a first predicted pixel of the first component, and a second predicted pixel of the first component and/or a second predicted pixel of the second component.

Optionally, at least one of the following is included:

the first reconstructed pixel is largest or smallest reconstructed pixel of the first component;

the first reconstructed pixel is a reconstructed pixel determined within a predetermined region; and

the first reconstructed pixel is largest or smallest reconstructed pixel of the first component within the predetermined region.

Optionally, at least one of the following is included:

the first reconstructed pixel is different from the first pixel;

the first predicted pixel is different from the first pixel;

the first reconstructed pixel is the same as the first pixel; and

the first predicted pixel is the same as the first pixel.

Optionally, a method for determining the first pixel includes at least one of the following:

determining the first pixel based on a third reconstructed pixel or a third predicted pixel of the first component;

determining the first pixel based on a downsampled pixel of the third reconstructed pixel or the third predicted pixel; and

determining the first pixel based on a fourth predicted pixel obtained by intra prediction or inter prediction of the current image block.

Optionally, the method further includes:

determining or obtaining a reconstructed image block corresponding to the current image block based on the second pixel; and

determining or obtaining a reconstructed pixel of the first component and/or a reconstructed pixel of the second component based on a reconstructed pixel of the first component of the reconstructed image block.

Optionally, at least one of the following is included:

the first component is a luma component;

the second component is a chroma component;

the first pixel is the predicted pixel or the reconstructed pixel; and

the second pixel is the predicted pixel or the reconstructed pixel.

The present application further provides a processing device, including: a memory and a processor. The memory stores an image processing program, and the image processing program, when executed by the processor, implements the steps of any of the above-described image processing methods.

The present application further provides a storage medium, the storage medium stores a computer program, and the computer program, when executed by a processor, implements the steps of any of the above-described image processing methods.

As described above, the image processing method of the present application can be applied to the processing device. The image processing method includes: determining or obtaining a second pixel of a first component and/or a second pixel of a second component of a current image block based on a first pixel of the first component of the current image block. Through the above technical solution, the distortion effect occurring when predicting pixels in the current image block can be reduced, thereby improving the accuracy of the prediction results for the luma component or the chroma component of the current image block.

## BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those of ordinary skill in the art, other drawings can be obtained based on these drawings without exerting creative efforts.

FIG. 1 is a schematic diagram of hardware structure of a mobile terminal implementing various embodiments of the present application.

FIG. 2 is a communication network system architecture diagram according to an embodiment of the present application.

FIG. 3 is a schematic diagram of an application scenario involving a prediction mode based on a convolutional cross-component model (CCCM).

FIG. 4 is a schematic diagram of another application scenario involving the prediction mode based on the convolutional cross-component model (CCCM).

FIG. 5 is a schematic diagram of an application scenario involving a cross-component residual model (CCRM).

FIG. 6A is a schematic structural diagram of an image encoder involved in the image processing method according to an embodiment of the present application.

FIG. 6B is a schematic structural diagram of an image decoder involved in the image processing method according to an embodiment of the present application.

FIG. 7 is a flowchart of the image processing method according to a first embodiment.

FIG. 8a to 8c are schematic diagrams of the number and positional relationship of luma pixels and chroma pixels in a coding unit under the YUV image format.

FIG. 9a to FIG. 9c are schematic diagrams of determining filter coefficients in the image processing method according to a second embodiment.

FIG. 10 is a schematic diagram of a position of luma pixels used for gradient calculation.

FIG. 11a to FIG. 11c are schematic diagrams of determining luma pixel y in the image processing method according to a third embodiment.

FIG. 12 is a schematic diagram of determining the luma pixel Luma1 in the image processing method according to the third embodiment.

FIG. 13 is a schematic diagram of determining luma pixels Luma2~LumaN in the image processing method according to the third embodiment.

FIG. 14 is another schematic diagram of determining luma pixels Luma2~LumaN in the image processing method according to the third embodiment.

FIG. 15 is a schematic diagram of selecting pixels to determine filter coefficients in the image processing method according to the third embodiment.

FIG. 16a to FIG. 16c are all schematic diagrams of the second chroma prediction process in the image processing method according to the third embodiment.

FIG. 17 is a schematic diagram of a relationship between each image unit in the image processing method according to a fifth embodiment.

FIG. 18 is another schematic diagram of a relationship between each image unit in the image processing method according to the fifth embodiment.

FIG. 19 is a schematic diagram of in-loop filtering processing in the image processing method according to the fifth embodiment.

FIG. 20a and FIG. 20b are both schematic diagrams of secondary division in the image processing method according to the fifth embodiment.

FIG. 21a and FIG. 21b are both schematic diagrams of reconstruction unit size expansion/combination in the image processing method according to the fifth embodiment.

The realization of the purpose, functional features and advantages of the present application will be further described in conjunction with the embodiments and with reference to the accompanying drawings. The above-mentioned drawings have shown clear embodiments of the present application, which will be described in more detail later. These drawings and textual descriptions are not intended to limit the scope of the concept of the present application in any way, but to illustrate the concept of the present application to those skilled in the art by referring to specific embodiments.

## DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatus and methods consistent with aspects of the present application as detailed in the appended claims.
It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element. In addition, components, features, and elements with the same name in different embodiments of the present application may have the same or different meanings. Its specific meaning needs to be determined according to its explanation in the specific embodiment or further combined with the context in the specific embodiment.
It should be understood that although the terms first, second, third, etc. may be used herein to describe various information, the information should not be limited to these terms. These terms are only used to distinguish information of the same type from one another. For example, without departing from the scope of this document, first information may also be called second information, and similarly, second information may also be called first information. Depending on the context, the word "if" as used herein may be interpreted as "at" or "when" or "in response to a determination". Furthermore, as used herein, the singular forms "a", "an" and "the" are intended to include the plural forms as well, unless the context indicates otherwise. It should be further understood that the terms "comprising", "including" indicate the existence of features, steps, operations, elements, components, items, species, and/or groups, but does not exclude the existence, occurrence or addition of one or more other features, steps, operations, elements, components, items, species, and/or groups. The terms "or", "and/or", "comprising at least one of" and the like used in the present application may be interpreted as inclusive, or mean any one or any combination. For example, "comprising at least one of: A, B, C" means "any of: A; B; C; A and B; A and C; B and C; A and B and C". As another example, "A, B, or C" or "A, B, and/or C" means "any of the following: A; B; C; A and B; A and C; B and C; A and B and C". Exceptions to this definition will only arise when combinations of elements, functions, steps or operations are inherently mutually exclusive in some way.
It should be understood that although the various steps in the flowchart in the embodiment of the present application are displayed sequentially as indicated by the arrows, these steps are not necessarily executed sequentially in the order indicated by the arrows. Unless otherwise specified herein, there is no strict order restriction on the execution of these steps, and they can be executed in other orders. Moreover, at least some of the steps in the figure may include multiple sub-steps or multiple stages, these sub-steps or stages are not necessarily executed at the same time, but can be executed at different times. The execution sequence thereof is not necessarily performed sequentially, but may be performed alternately or alternately with at least one part of other steps or sub-steps or stages of other steps.
Depending on the context, the words "if" as used herein may be interpreted as "at" or "when" or "in response to determining" or "in response to detecting". Similarly, depending on the context, the phrases "if determined" or "if detected (the stated condition or event)" could be interpreted as "when determined" or "in response to the determination" or "when detected (the stated condition or event)" or "in response to detection (the stated condition or event)".
It should be noted that in this article, step codes such as S10 are used for the purpose of expressing the corresponding content more clearly and concisely, and do not constitute a substantial limitation on the order. When those skilled in the art implement the steps specifically, they may execute other steps before executing S10, etc., but these should all be within the scope of the present application.

It should be understood that the specific embodiments described here are only used to explain the present application, and are not intended to limit the present application.

In the following description, the use of suffixes such as "module", "part" or "unit" for denoting elements is only for facilitating the description of the present application and has no specific meaning by itself. Therefore, "module", "part" or "unit" may be used in combination.

The processing device in the present application can be a smart terminal, or a server. Optionally, the smart terminal can be implemented in various forms. For example, the smart terminal described in the present application can include a mobile phone, a tablet computer, a laptop computer, a PDA, a portable media player (PMP), a navigation device, a wearable device, a smart bracelet, a pedometer, etc., or a fixed terminal such as a digital TV and a desktop computer.

The present application takes a mobile terminal as an example to illustrate. Those skilled in the art will understand that, in addition to elements specifically used for mobile purposes, the configuration according to the embodiments of the present application can also be applied to the fixed terminal device.

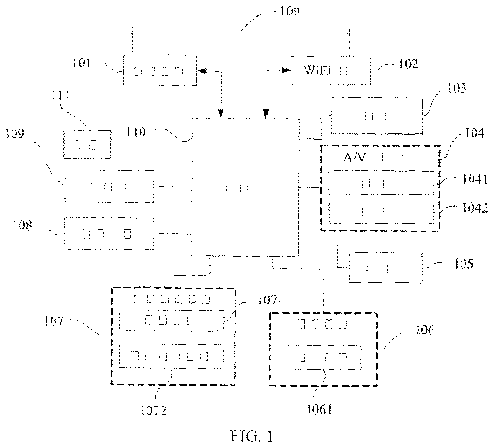

As shown in FIG. 1, FIG. 1 is a schematic structural diagram of a hardware of a mobile terminal that implements various embodiments of the present application. The mobile terminal 100 can include a Radio Frequency (RF) unit 101, a WiFi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in FIG. 1 does not constitute a limitation on the mobile terminal. The mobile terminal can include more or fewer components, or a combination of some components, or differently arranged components than shown in the figure.

Hereinafter, each component of the mobile terminal will be specifically introduced with reference to FIG. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The above-mentioned wireless communication can use any communication standard or protocol, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), and 5G, 6G, or the like.

Wi-Fi is a short-range wireless transmission technology. The mobile terminal can help users transmit and receive email, browse webpage, and access streaming media through the Wi-Fi module 102, and Wi-Fi provides users with wireless broadband Internet access. Although FIG. 1 shows the Wi-Fi module 102, it is understandable that it is not a necessary component of the mobile terminal and can be omitted as needed without changing the essence of the present application.

When the mobile terminal 100 is in a call signal receiving mode, a call mode, a recording mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can also provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture pattern or an image capture pattern. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation patterns such as a call pattern, a recording pattern, a voice recognition pattern, and the like, and can process such sound into audio data. The processed audio (voice) data can be converted into a format that can be sent to a mobile communication base station via the radio frequency unit 101 in the case of a call pattern for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Specifically, the light sensor includes an ambient light sensor and a proximity sensor. The ambient light sensor can adjust the luma of the display panel 1061 according to the luma of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switch, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated herein.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the mobile terminal. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and sends it to the processor 110, and can receive and execute the instructions sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

Further, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external device can be connected to the mobile terminal 100. For example, the external device can include a wired or wireless earphone port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a high-speed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or performing the software programs and/or modules stored in the memory 109, and calling the data stored in the memory 109, various functions and processing data of the mobile terminal are executed, thereby overall monitoring of the mobile terminal is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The mobile terminal 100 can also include a power source 111 (such as a battery) for supplying power to various components. The power supply 111 can be logically connected to the processor 110 through a power management system, so that functions such as charging, discharging, and power consumption management can be managed through the power management system.

Although not shown in FIG. 1, the mobile terminal 100 can also include a Bluetooth module, or the like, which will not be repeated herein.

In order to facilitate the understanding of the embodiments of the present application, the following describes the communication network system on which the mobile terminal of the present application is based.

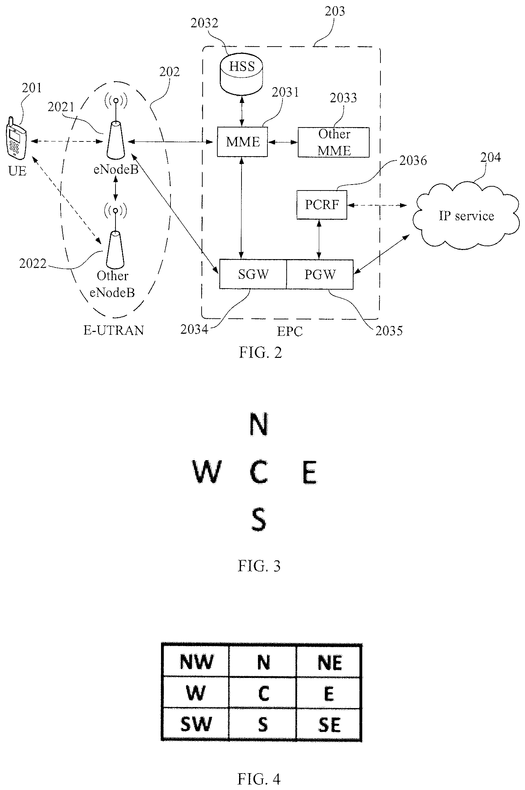

As shown in FIG. 2, FIG. 2 is a communication network system architecture diagram according to an embodiment of the present application. The communication network system is a LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

Optionally, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service feature, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include Internet, intranet, IP Multimedia Subsystem (IMS), or other IP services.

Although the LTE system is described above as an example, those skilled in the art should know that, the present application is not only applicable to the LTE system, but also applicable to other wireless communication systems, such as GSM, CDMA2000, WCDMA, TD-SCDMA, 5G and new network systems in the future (such as 6G), or the like, which is not limited herein.

Based on the above-described mobile terminal hardware structure and communication network system, various embodiments of the present application are proposed.

The present application provides an image processing method that can determine or obtain a second pixel of the first component and/or a second pixel of the second component based on the first pixel of the first component of the current image block. This reduces the distortion effects that occur when predicting pixels in the current image block, thereby improving the accuracy of the prediction results for the luma component or the chroma component of the current image block.

To facilitate understanding, the following explains the technical terms that may be used in the embodiments of the present application.

(1) Prediction mode

Predicting image blocks is an essential step in the image encoding or decoding process. For example, the encoder obtains prediction blocks by predicting image blocks, constructs residual blocks with lower energy, and reduces the number of transmitted bits; the decoder obtains residual blocks through entropy decoding, and combines the residual blocks with the prediction blocks obtained in the decoder to obtain the decoded image blocks, thus achieving image decoding. The prediction of image blocks by the encoder or decoder can be achieved through some preset prediction modes, which can include inter prediction modes and intra prediction modes.

(2) Prediction model based on convolutional cross-component model (CCCM)

The prediction model based on Convolutional Cross-Component Model (CCCM) uses the filter to predict the chroma of the current image block from the reconstructed luma pixels. Optionally, the filter used in CCCM consists of a 5-tap (or 7-tap) plus shape space component, a nonlinear term, and a bias term. The input of the space 5-tap component of the filter includes the center (C) luma sample, as well as the upper sample (also known as northern sample, N), lower sample (also known as southern sample, S), left sample (also known as western sample, W), and right sample (also known as eastern sample, E) of the center (C) luma sample.

The formula used by CCCM to calculate pixels for chroma prediction is as follows:

$$predChromaVal = c0*C + c1*N + c2*S + c3*E + c4*W + c5*P + c6*B$$

C represents the luma sample at the position corresponding to the current chroma sample, and N, S, E, and W are the adjacent samples of the current luma sample, as shown in FIG. 3.

The nonlinear term P = (C*C + midVal) >> bitDepth, and the bias term B = midVal. The bias term B represents the scalar offset between the input and output (similar to the offset term in CCLM) and is set to a mid chroma value (B=512 for 10-bit video).

Gy and Gx are the vertical and horizontal gradients, respectively, as shown in FIG. 4. The formulas for calculating Gy and Gx are as follows:

$$Gy = (2N + NW + NE) - (2S + SW + SE)$$

$$Gx = (2W + NW + SW) - (2E + NE + SE)$$

The Y and X parameters are the vertical and horizontal positions of the center luma sample, which are calculated relative to the top-left coordinates of the sample (also known as the image block) whose chroma needs to be predicted.

(3) Cross-Component Residual Model (CCRM)

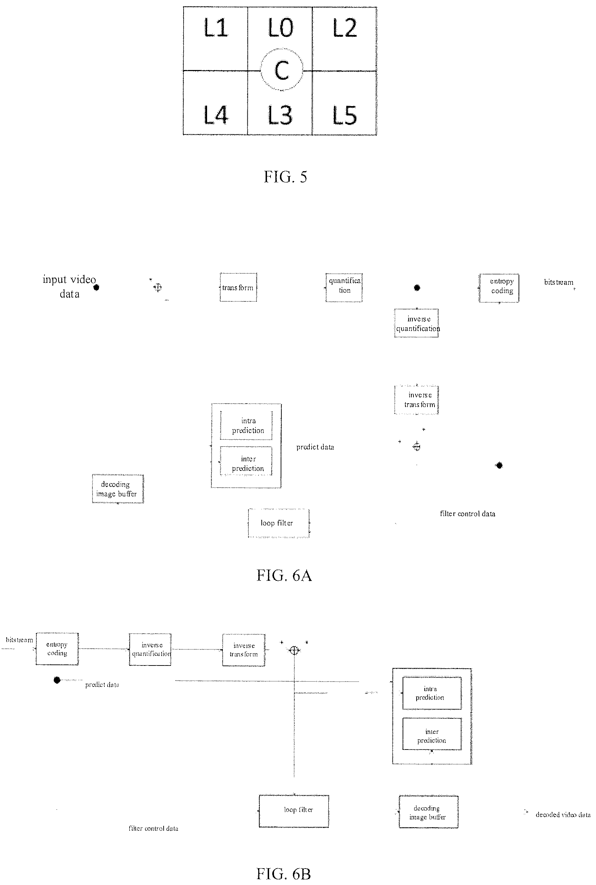

The Cross-Component Residual Model (CCRM) derives a cross-component filter using prediction blocks for luma and chroma. The derived filter is applied to the reconstructed luma block and mixed with the chroma prediction block to obtain the final chroma prediction block. Optionally, when calculating the convolution filter and filter coefficients, CCRM assumes that the proposed 8-tap filter consists of 6 spatial luma samples, a nonlinear term, and a bias term. The spatial luma samples (L0, ..., L5) are obtained from the luma grid, as shown in FIG. 5, the 6 luma samples closest to the chroma position C are selected without downsampling.

Based on this, the formula used by CCRM to calculate the chroma prediction pixel is as follows:

predChromaVal = c0*L0+ c1*L1 + c2*L2 + c3*L3 + c4*L4 + c5*L5 + c6* nonlinear((L0+L3+1) >> 1) + c7*B.

Optionally, the nonlinear operator is the nonlinear operator of CCCM, and B is the bias term.

Optionally, with reference to FIGS. 6A and 6B, FIG. 6A is a schematic diagram of the image encoder involved in the image processing method, and FIG. 6B is a schematic diagram of the image decoder involved in the image processing method. As shown in FIG. 6A, the encoder at the encoder side typically divides the input video image into at least one image block per frame for processing. Each image block can be subtracted from the predicted block obtained through the prediction mode to obtain a residual block. Then, a series of processing steps are performed on the residual block and the relevant parameters of the prediction mode to obtain the encoded bitstream. Subsequently, at the decoder side, as shown in FIG. 6B, the decoder receives the bitstream and can obtain the prediction mode parameters by parsing the bitstream. Then, the decoder's inverse transform unit and inverse quantization unit perform inverse transform and inverse quantization on the transform coefficients to obtain the residual block. Optionally, the decoding unit of the decoder parses and decodes the encoded bitstream to obtain prediction parameters and related side information. Next, the decoder's prediction process unit uses the prediction parameters to perform prediction, thereby determining the prediction block corresponding to the residual block. Thus, the decoder can obtain the reconstructed block by adding the obtained residual block and the corresponding prediction block. Optionally, the in-loop filtering unit of the decoder performs in-loop filtering on the reconstructed block to reduce distortion and improve video quality. Therefore, the reconstructed block after in-loop filtering is further combined into a decoded image and stored in the decoded image buffer or output as a decoded video signal.

Optionally, the image processing method provided in the present application can be applied to scenarios where chroma prediction and/or luma prediction of image blocks are performed during the video image encoding process described above, such as intra prediction and inter prediction during image encoding. Optionally, the image processing method provided in the present application can also be used in scenarios where chroma prediction and/or luma prediction of image blocks to be decoded are performed during video decoding, such as intra prediction and inter prediction during image decoding.

First embodiment

In this embodiment, the execution entity of the image processing method can be the aforementioned processing device, or a cluster composed of multiple processing devices. The processing device can be a smart terminal (such as the aforementioned mobile terminal 100) or a server. Here, the image processing method will be described using the processing device as the execution entity in the first embodiment.

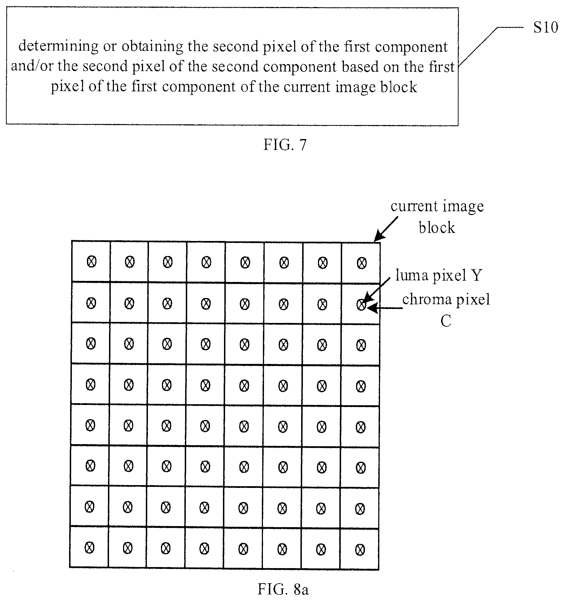

As shown in FIG. 7, FIG. 7 is a flowchart of the image processing method according to the first embodiment. In this embodiment, the image processing method includes the following steps:

S10: determining or obtaining the second pixel of the first component and/or the second pixel of the second component based on the first pixel of the first component of the current image block.

Optionally, during the encoding or decoding process of the image, the processing device employs inter prediction mode and/or intra prediction mode to perform chroma prediction and/or luma prediction for the second pixel to be predicted in the current image block. That is, the processing device first obtains or determines at least one first pixel of a first component in the current image block, and then the processing device predicts the second pixel of the first component based on the pixel value of the first pixel, thereby determining or obtaining the pixel value of the second pixel of the first component, and/or, the processing device further predicts the second pixel of the second component based on the pixel value of the first pixel, thereby determining or obtaining the pixel value of the second pixel of the second component.

Optionally, in the present application, the current image block can be an image region within an input video image (i.e., a video frame) that is being encoded or decoded and requires chroma prediction and/or luma prediction. The current image block can also be an image region to be encoded, or an image region that has already been reconstructed or decoded. Optionally, the image block currently undergoing encoding or decoding can be simply referred to as the current block, the current unit, or the current processing block. Optionally, the first pixel can also be referred to as the reference pixel, the first sample, or the reference sample, while the second pixel can also be called the pixel to be predicted or the sample to be predicted. Under the H.265/High Efficiency Video Coding (HEVC) standard, both the first and second pixels can be pixels or samples within a coding tree unit (CTU) or coding unit (CU) of the input video image. The present application does not impose specific limitations on the definition or type of the current image block, the first pixel, and the second pixel.

Optionally, the first component is a luma component. That is, the first pixel of the first component is a luma component pixel. Optionally, when the processing device performs chroma prediction and/or luma prediction for a second pixel to be predicted in the current image block, it may acquire or determine at least one first pixel with a known luma component, and then perform chroma prediction and/or luma prediction for the second pixel based on the pixel value of the first pixel.

Optionally, the first component is a luma component, and the second component is a chroma component. That is, the second pixel of the first component is a luma component pixel, and the second pixel of the second component is a chroma component pixel. Optionally, the processing device can predict the luma component of the second pixel based on the first pixel with known luma components. Optionally, the processing device can predict the luma component of the second pixel based on the first pixel with known chroma components.

Optionally, in this embodiment and other embodiments described above and below, after receiving a video image from a video source, the processing device, acting as an encoder, segments the video image to obtain at least one image block. When the processing device performs chroma prediction and/or luma prediction on the current image block using an inter prediction mode (especially a cross-component residual prediction mode), the processing device takes the pixel in the current image block whose chroma component and/or luma component need to be predicted as the second pixel, and then directly uses the pixel value (luma value) of the first pixel in the current image block whose luma component is known to predict the chroma component and/or luma component of the second pixel, thereby obtaining the chroma component prediction result and/or luma component prediction result of the second pixel.

Optionally, the processing device, acting as an encoder, can use, for example, a rate-distortion optimization algorithm to determine the inter-prediction mode ultimately adopted by the current image block. Optionally, the processing device can calculate the rate-distortion cost corresponding to each prediction mode to determine the minimum rate-distortion cost from the rate-distortion costs corresponding to multiple prediction modes, and the prediction mode corresponding to the minimum rate-distortion cost is the prediction mode ultimately adopted by the current image block. That is, assuming that for the prediction process of the image block to be chroma predicted, the available prediction modes are inter prediction modes 0-N (optionally, including cross-component residual prediction modes based on inter prediction), and when the processing device calculates that the prediction mode corresponding to the minimum rate-distortion cost for chroma prediction is mode i, the processing device determines mode i as the final intra prediction mode used for chroma prediction of the current image block to be processed. Optionally, i = 0, ..., N.

Optionally, after the processing device determines or obtains the chroma component and/or luma component of the second pixel in the current image block by predicting pixel on a sample-by-sample basis or a block-by-block basis according to the above process, the processing device as an encoder may further subtract the predicted value of the corresponding pixel in the predicted image block (i.e., the image block chroma information of the image block) from the pixel value of the pixel in the current image block to obtain the residual value of the pixel and the residual block corresponding to the image block. Subsequently, the residual block undergoes transformation and quantization, and is then encoded by an entropy encoder to form the encoded bitstream. Optionally, the encoded bitstream may also include prediction parameters (packed into the encoded bitstream after entropy encoding) corresponding to the inter prediction mode determined by the processing device through the above process, as well as related side information. Optionally, if the processing device uses a cross-component inter prediction mode, the aforementioned prediction parameters will at least include indication information regarding the use of a cross-component inter prediction model for prediction operations.

Optionally, the transformed and quantized residual block is added to the corresponding predicted image block (also called the prediction block) obtained using the prediction mode to obtain a reconstructed image block (also called the reconstructed block). After obtaining the reconstructed image block, the processing device also performs in-loop filtering on the reconstructed image block to reduce distortion.

Optionally, when the processing device acts as a decoder, it can receive the encoded bitstream transmitted by the processing device acting as an encoder. After receiving the bitstream encoded by the encoder, the decoding unit of the decoder parses and decodes the bitstream to obtain prediction parameters. Optionally, the inverse transform unit and inverse quantization unit of the decoder perform inverse transform and inverse quantization processing on the transform coefficients to obtain a residual block. Next, the prediction process unit of the decoder can use the residual block as the current processing block that needs to be decoded, and perform prediction using the prediction parameters to determine the prediction block corresponding to the residual block.

Optionally, when the decoder uses the same inter prediction mode as the encoder, it can use the prediction parameters obtained by parsing the bitstream to obtain or determine the prediction mode required for chroma prediction and/or luma prediction of the current image block to be processed (for example, when the prediction parameters indicate that the corresponding prediction mode is cross-component residual prediction mode based on inter prediction, the decoder will use cross-component residual prediction mode as the inter prediction mode for performing chroma prediction and/or luma prediction of the decoded residual block). Therefore, the decoder directly uses the inter prediction mode to use the pixel value (luma value) of the first pixel in the image block whose chroma or luma components are known, to predict the chroma component and/or the luma component of the pixel to be predicted of the second pixel, thereby obtaining the chroma component prediction result and/or luma component prediction result of the second pixel.

Optionally, the processing device, acting as a decoder, determines or derives the chroma component prediction result and/or luma component prediction result of the second pixel to be predicted in the image block using a pixel-by-pixel method (also known as a sample-by-sample method) or block-by-block method. Optionally, after determining or deriving the chroma information and/or luma information of the current image block, the processing device may further add the resolved residual block and the predicted value of the corresponding pixel in the current image block (the chroma information and/or the luma information of the image block) to obtain the reconstructed block. Finally, the processing device also performs in-loop filtering on the reconstructed blocks through in-loop filtering unit to reduce distortion and improve video quality. The reconstructed blocks that have undergone in-loop filtering are then further combined into a decoded image and stored in the decoded image buffer or output as a decoded video signal.

Optionally, in this embodiment and other embodiments described above and below, the prediction mode used by the processing device as an encoder or decoder to predict the current image block (e.g., chroma block) can be the cross-component residual prediction model CCRM as shown in formula (1):

$$predChromaVal = c0*L0+c1*L1 + c2*L2 + c3*L3 + c4*L4 + c5*L5 + c6 *nonlinear((L0+L3+1) >> 1) + c7* B \qquad (1)$$

Optionally, taking chroma prediction as an example, predChromaVal is the predicted chroma value of the second pixel to be predicted in the current image block, c0~c7 are filter coefficients, L0, ..., L5 are the 6 luma samples closest to the chroma position C obtained from the luma grid (as shown in FIG. 5), and L0, ..., L5 are not downsampled, the nonlinear operator can be the nonlinear operator of CCCM, B is the bias term, which represents the scalar offset between input and output (for a 10-bit depth video, B is set to the chroma median, i.e., 512).

Optionally, in order to perform chroma inter prediction process using the CCRM model shown in formula (1), the processing device needs to determine the filter coefficients c0~c7 and the luma values L0 to L5 in formula (1), and then obtain the chroma prediction result of the second pixel predChromaVal based on formula (1). Optionally, the processing device can determine the filter coefficients in formula (1) by: obtaining or determining at least one reference region within the image frame where the image block to be chroma predicted is located, and determining the filter coefficients based on the sampled values of the luma/chroma pixels in the at least one reference region. Optionally, at least one luma reference region is acquired or determined when performing chroma prediction.

In this embodiment, when the image processing method predicts the chroma component and/or luma component of an image block through the processing device, it acquires or determines at least one first pixel of a first component in the current image block, and then predicts a second pixel of the first component based on the pixel value of the first pixel, thereby determining or obtaining the pixel value of the second pixel of the first component, and/or predicts a second pixel of the second component based on the pixel value of the first pixel, thereby determining or obtaining the pixel value of the second pixel of the second component. That is, the technical solution of the present application fully considers the correlation between the reference pixel of the known luma component in the current image block and the pixel to be predicted, which can reduce the distortion effect when the pixel in the current image block is predicted during the video encoding and decoding process, thereby improving the accuracy of the prediction result of the luma component or chroma component of the current image block.

Second embodiment

In this embodiment, the image processing method is still described using a processing device as the execution entity. Based on the first embodiment described above, the image processing method may include at least one of the following:

determining or obtaining a second pixel based on at least one of a downsampling model, a non-downsampling model, a gradient model, a convolutional prediction model, and a linear prediction model, and a first pixel;

determining or obtaining a second pixel based on the first pixel and filter coefficients.

Optionally, the second pixel is the second pixel of the first component and/or the second pixel of the second component.

Optionally, when the processing device performs chroma component prediction or luma component prediction on a second pixel using a first pixel with a known first component in the current image block, it may use the pixel value of the first pixel and at least one of the following models: the downsampling model, the non-downsampling model, the gradient model, the convolutional prediction model, and the linear prediction model, to perform chroma component prediction or luma component prediction on the second pixel, thereby determining or obtaining the prediction result of the first component of the second pixel, and/or determining or obtaining the prediction result of the second component of the second pixel.

Optionally, when the processing device performs chroma component prediction or luma component prediction on a second pixel using a first pixel with a known first component in the current image block, it can perform chroma component prediction or luma component prediction on the second pixel based on the pixel value and filter coefficients of the first pixel, thereby determining or obtaining the prediction result of the second pixel. The second pixel can be a luma component pixel or a chroma component pixel.

Optionally, the processing device can perform chroma component prediction or luma component prediction on the second pixel based on the first pixel and filter coefficients, applying an intra prediction cross-component prediction mode or a same-component prediction mode. The filter coefficients can be determined using reconstructed or predicted pixels corresponding to the image block containing the first pixel.

In this embodiment, the filter coefficients are determined using reconstructed or predicted pixels of the image block containing the first pixel. This method of determining the filter coefficients differs from the method of determining filter coefficients by selecting reconstructed pixels from a reference area set next to (above or to the left of) the image block containing the first pixel. This embodiment improves the accuracy of the prediction results by using pixels in the image block containing the first pixel (i.e., the current image block) to determine the filter coefficients and performing prediction operations based on the determined filter coefficients.

Optionally, the current image block includes at least one of a luma image block and a chroma image block.

Optionally, the image processing method, through the processing device, can predict the current image block in units of coding units (including one luma image block and two chroma image blocks) according to the following process. That is, the processing device determines the predicted pixel value of the predicted pixel in the prediction unit corresponding to the current image block by performing a first prediction process on the current image block. Optionally, the processing device can determine the first luma predicted pixel value of the luma prediction block of the prediction unit and the first chroma predicted pixel value of the chroma prediction block of the prediction unit through a prediction mode. Then, the processing device further determines the reconstructed pixel value of the reconstructed pixel in the reconstruction unit corresponding to the current image block based on the predicted pixel value and the residual value of the first residual corresponding to the coding unit. Next, the processing device uses the reconstructed pixel value or the predicted pixel value as the first pixel of the first component to determine the filter coefficients of the filter to be used in the second prediction process. Finally, the processing device can perform the formal second prediction process using the pixel value of the first pixel and the filter coefficients to determine the second chroma prediction pixel value of the chroma prediction block corresponding to the current image block, and/or determine the second luma prediction pixel value of the luma prediction block corresponding to the current image block, and perform encoding or decoding processing using the second chroma prediction pixel value and/or the second luma prediction pixel value.

Optionally, the aforementioned current image block can also be referred to as a coding unit. The pixels used to determine filter coefficients (e.g., reconstructed pixels, predicted pixels), and the predicted pixels corresponding to the determined second chroma prediction pixel value and/or second luma prediction pixel value-the second pixel-all correspond to the same coding unit.

Optionally, for YUV format video, common formats include YUV444, YUV422, and YUV420. These video formats were designed based on the physiological characteristic that the human eye is highly sensitive to luma but less sensitive to color, thus preserving the Y, U, and V components using different sampling methods. Due to the differences in these formats, in YUV422 and YUV420 formats, the size of the luma block in the coding unit is larger than the size of the chroma block. That is, the information in the luma block of the coding unit is richer than that in the chroma block. Therefore, typically, for both video formats, the processing device can use the luma value (e.g., luma reconstruction value) to predict the chroma value during the second prediction process based on the aforementioned filter coefficients. In one embodiment, for a video sequence in YUV444 format, the processing device can use the chroma value (e.g., chroma reconstruction value) to predict the luma value during the second prediction process.

Optionally, the first component is the luma component.

Optionally, the second component is the chroma component.

Optionally, the first pixel is a predicted pixel or a reconstructed pixel.

Optionally, the second pixel is a predicted pixel or a reconstructed pixel.

Optionally, the method for determining the filter coefficients includes at least one of the following:
First method: determining the filter coefficients based on the first reconstructed pixel of the first component, and the second reconstructed pixel of the first component and/or the second reconstructed pixel of the second component.

Optionally, when determining the filter coefficients, the processing device may determine the filter coefficients based on the first reconstructed pixel of the first component (i.e., the first luma reconstructed pixel) and the second reconstructed pixel of the first component (i.e., the second luma reconstructed pixel). Optionally, when determining the filter coefficients, the processing device may also determine the filter coefficients based on the first luma reconstructed pixel and the second reconstructed pixel of the second component (i.e., the chroma reconstructed pixel). Furthermore, when determining the filter coefficients, the processing device may also determine the filter coefficients based on a combination of the first luma reconstructed pixel, the second luma reconstructed pixel, and the chroma reconstructed pixel.

Optionally, at the encoding end, for the luma block of the prediction unit corresponding to the current image block, the processing device can traverse all prediction modes except those required for the second prediction process, select the optimal prediction mode for the luma block of the prediction unit, and perform a first prediction process based on the optimal prediction mode to determine the prediction result of the luma block (i.e., the first luma prediction pixel value). Similarly, for the chroma block of the prediction unit corresponding to the encoding unit, the processing device also traverses all prediction modes except those required for the second prediction process to select the optimal prediction mode for the chroma block of the prediction unit, and performs a first prediction process based on the optimal prediction mode to determine the prediction result of the chroma block (i.e., the first chroma prediction pixel value).

Optionally, all prediction modes mentioned above, except for the prediction mode required for the second prediction process, can be: intra prediction mode and inter prediction mode, or a combination of intra prediction mode and inter prediction mode.

Optionally, intra prediction modes include DC mode, planar mode, angle mode, intra-block copy (IBC) mode, etc.

Optionally, the main tasks of inter prediction mode when the processing device is an encoding end include: motion estimation and motion compensation.

Optionally, when the processing device performs the first prediction process using the selected prediction mode, the selected prediction mode for the luma block and the selected prediction mode for the chroma block can be the same or different.

Optionally, after performing the first prediction process to obtain the first luma prediction pixel value of the luma block of the prediction unit corresponding to the current image block, the processing device determines the first luma reconstructed pixel value of the first luma reconstructed pixel of the luma reconstruction block corresponding to the luma prediction block based on the first luma prediction pixel value and the first luma residual value in the first luma residual in the residual block corresponding to the luma prediction block. Optionally, the first luma residual is obtained by subtracting the predicted pixel value of the luma prediction block from the original luma block, followed by transformation, quantization, inverse transformation, and inverse quantization.

Optionally, after performing the first prediction process to obtain the first chroma prediction pixel value of the chroma block of the prediction unit corresponding to the current image block, the processing device determines the first chroma reconstructed pixel value of the first chroma reconstructed pixel of the chroma reconstructed block corresponding to the chroma prediction block based on the first chroma prediction pixel value and the first chroma residual value of the first chroma residual in the residual block corresponding to the chroma prediction block.

Optionally, the first chroma residual is obtained by subtracting the predicted pixel value of the chroma prediction block from the original chroma block, followed by transformation, quantization, inverse transformation, and inverse quantization.

Optionally, after further determining the first luma reconstructed pixel value and the first chroma reconstructed pixel value, the processing device can determine the filter coefficients of the filter to be used in the subsequent second prediction process using these values.

Optionally, when the positions of the first chroma prediction pixel and the first luma reconstructed pixel correspond to each other, the processing device can directly determine the filter coefficients of the filter to be used in the subsequent second prediction process using the first luma reconstructed pixel value and the first chroma reconstructed pixel value.

Optionally, the second reconstructed pixel of the first component (i.e., the second luma reconstructed pixel) can be the downsampled luma reconstructed pixel corresponding to the first luma reconstructed pixel.

Optionally, the processing device can also obtain the downsampled first luma reconstructed pixel by downsampling the first luma reconstructed pixel. Therefore, the processing device can determine the filter coefficients using the first luma reconstructed pixel value and the first chroma reconstructed pixel value of the downsampled first luma reconstructed pixel.

Optionally, the processing device can also determine or select a first luma reconstructed pixel value from the aforementioned luma reconstructed block according to a predetermined reconstructed pixel selection rule, and determine the filter coefficients based on the determined or selected first luma reconstructed pixel value and the corresponding first chroma pixel value.

Optionally, the first pixel is a reconstructed pixel.

Optionally, the second pixel is a predicted pixel.

Optionally, the processing device can use the aforementioned reconstructed pixel as the first pixel, thereby determining or obtaining the second pixel of the first component and/or the second pixel of the second component based on the reconstructed pixel and the filter coefficients.

Optionally, after determining the filter coefficients, the processing device can perform a second prediction process on the predicted pixel of the prediction unit corresponding to the current image block using the aforementioned first luma reconstructed pixel value and the filter coefficients, thereby determining the second chroma predicted pixel value of the chroma prediction block corresponding to the prediction unit, and, or determining the second luma predicted pixel value of the luma prediction block corresponding to the prediction unit.

Optionally, after the processing device, acting as an encoder, performs the second prediction process to determine the second chroma prediction pixel value, it can further determine the second chroma residual of the chroma block corresponding to the current image block through the original chroma pixel value corresponding to the current image block and the second chroma prediction pixel value, and then perform entropy coding processing on the first chroma residual and the second chroma residual.

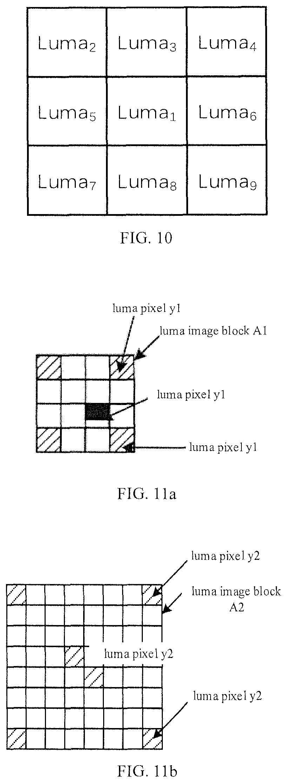

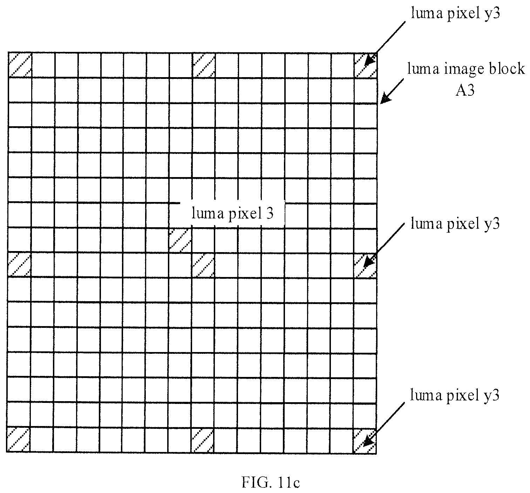

Optionally, the first chroma residual can be the residual corresponding to the first chroma reconstructed pixel used to determine the filter coefficients in the current image block, rather than the residual corresponding to all chroma reconstructed pixels in the current image block; the second chroma residual can be the residual corresponding to all chroma reconstructed pixels in the current image block. That is, the first residual is obtained by performing a first prediction process only on the pixels used to determine the filter coefficients. The pixels used to determine the filter coefficients are pixels selected according to a preset rule. For example, pixels selected according to the preset rules shown in FIGS. 11a-11c.

Optionally, when the processing device acts as an encoder, if the first chroma residual is the residual corresponding to all chroma reconstructed pixels in the current image block, then only the residual corresponding to the chroma reconstructed pixels used to determine the filter coefficients in the first chroma residual can be entropy encoded or entropy decoded, without needing to perform entropy encoded or entropy decoded processing on the residuals corresponding to the chroma reconstructed pixels not used to determine the filter coefficients in the first chroma residual.

Optionally, the processing device can further determine the difference between the first chroma residual and the second chroma residual, and perform entropy encoding or entropy decoding on the difference between the second chroma residual and the first chroma residual and the second chroma residual, without performing entropy encoding or entropy decoding on the first chroma residual. Optionally, the processing device can further determine the difference between the first chroma residual and the second chroma residual, and perform entropy encoding or entropy decoding on the difference between the first chroma residual and the second chroma residual, without performing entropy encoding or entropy decoding on the second chroma residual.

Optionally, at the decoding end, for the luma block of the prediction unit corresponding to the current image block, the processing device can decode the prediction mode corresponding to the luma block from the bitstream transmitted from the encoding end, and determine the prediction result (i.e., the predicted pixel value) of the luma block based on the prediction mode.

Optionally, for the chroma block of the prediction unit corresponding to the current image block, the processing device can also decode the prediction mode corresponding to the chroma block from the bit stream and determine the prediction result (i.e., the predicted pixel value) of the chroma block based on the prediction mode.

Optionally, the prediction mode decoded by the processing device from the bitstream is a prediction mode other than the prediction mode used in the second prediction process at the encoding end. Optionally, the prediction mode decoded by the processing device from the bitstream can be an intra prediction mode and an inter prediction mode, or a combination of intra and inter prediction modes. Optionally, the intra prediction mode includes at least one of: DC mode,

EP 4 770 092 A1

planar mode, angle mode, and intra-block copy (IBC) mode. The main tasks of the inter prediction mode at the encoding end include motion estimation and motion compensation.

Optionally, the processing device can obtain the prediction result of the luma block by performing the first luma prediction process using the above prediction mode, and can obtain the prediction result of the chroma block by performing the first chroma prediction process using the above prediction mode.

Optionally, the prediction mode of the luma block and the prediction mode of the chroma block can be the same or different.

Optionally, after determining the predicted pixel values of the luma/chroma blocks of the prediction unit corresponding to the current image block, the processing device can determine the first luma reconstruction pixel value of the luma reconstruction block corresponding to the current image block based on the predicted pixel values of the luma blocks and the first luma residual corresponding to the current image block. Similarly, it can determine the first chroma reconstruction pixel value of the chroma reconstruction block corresponding to the current image block based on the predicted pixel values of the chroma blocks and the first chroma residual corresponding to the current image block.

Optionally, the first luma residual can be obtained by decoding compressed data in the bitstream. Optionally, the processing device can obtain the first chroma residual for the first prediction process of the current image block and the second chroma residual for the second prediction process of the current image block by decoding the compressed data in the bitstream.

Optionally, after determining the first luma reconstruction pixel value of the luma reconstruction block and the first chroma reconstruction pixel value of the chroma reconstruction block corresponding to the current image block, the processing device can determine the filter coefficients of the filter used in the second prediction process based on these first luma reconstruction pixel values and the first chroma reconstruction pixel values.

Optionally, the processing device can further downsample the first luma reconstructed pixel to obtain a downsampled first luma reconstructed pixel, and use the first luma reconstructed pixel value and the first chroma reconstructed pixel value of the downsampled first luma reconstructed pixel to determine the filter coefficients.

Optionally, the processing device can also select a first luma reconstructed pixel value from the aforementioned luma reconstructed block according to a predetermined reconstructed pixel selection rule, and determine the filter coefficients of the filter based on the determined/selected first luma reconstructed pixel value and the corresponding corresponding first chroma pixel value.

Optionally, after determining the filter coefficients, the processing device can perform a second prediction process on the current image block using the luma reconstructed pixel value and the filter coefficients, thereby determining the second predicted pixel value of the chroma block corresponding to the current image block.

Optionally, the first pixel is a predicted pixel.

Optionally, the second pixel is a reconstructed pixel.

Optionally, the processing device can use the aforementioned first luma prediction pixel as the first pixel, and then, based on the first luma prediction pixel and filter coefficients, determine or obtain the second pixel of the first component (i.e., the luma reconstructed pixel) and/or the second pixel of the second component (i.e., the chroma reconstructed pixel).

Optionally, after determining the filter coefficients, the processing device can also perform a second prediction process on the current image block using the aforementioned first luma prediction pixel value and filter coefficients, thereby determining the second predicted pixel value of the chroma block corresponding to the current image block. And/or, the processing device further determines the second chroma reconstructed pixel value of the chroma block corresponding to the current image block using the second predicted pixel value and the second chroma residual corresponding to the current image block. Therefore, the processing device can further obtain the decoded image by performing in-loop filtering on the second chroma reconstructed pixel value.

Second method: determining the filter coefficients based on the first reconstructed pixel of the first component and the second predicted pixel of the first component and/or the second predicted pixel of the second component.

Optionally, when determining the filter coefficients, the processing device may also determine the filter coefficients based on the first reconstructed pixel of the first component (i.e., the first luma reconstructed pixel) and the second predicted pixel of the first component (i.e., the second luma predicted pixel). Optionally, when determining the filter coefficients, the processing device may also determine the filter coefficients based on the first luma reconstructed pixel and the second predicted pixel of the second component (i.e., the chroma predicted pixel). Furthermore, when determining the filter coefficients, the processing device may also determine the filter coefficients based on a combination of the first luma reconstructed pixel, the second luma predicted pixel, and the chroma predicted pixel.

Optionally, at the encoding end, for the luma block of the prediction unit corresponding to the current image block, the processing device can traverse all prediction modes except those used for the second prediction process to select the optimal prediction mode for the luma block, and determine the prediction result (i.e., the first luma prediction pixel value) of the luma block based on the optimal prediction mode. Optionally, for the chroma block of the prediction unit corresponding to the current image block, the processing device can also traverse all prediction modes except those used for the second prediction process to select the optimal prediction mode for the chroma block, and determine the prediction result (i.e., the first chroma prediction pixel value) of the chroma block based on the optimal prediction mode.

Optionally, the prediction modes other than those used in the second prediction process can be intra prediction modes, inter prediction modes, or a combination of intra and inter prediction modes.

Optionally, the intra prediction modes include at least one of the following: DC mode, planar mode, angle mode, and intra-block copy (IBC) mode. The main tasks of the inter prediction mode at the encoding end include motion estimation and motion compensation.

Optionally, the processing device performs the first prediction process using prediction modes other than those used in the second prediction process to obtain the prediction results for luma blocks or chroma blocks.

Optionally, the prediction modes for luma blocks and chroma blocks can be the same or different.

Optionally, after determining the first luma prediction pixel value of the luma block corresponding to the current image block, the processing device can determine the first luma reconstruction pixel value of the luma reconstruction block corresponding to the current image block based on the first luma prediction pixel value and the first luma residual value of the first luma residual in the luma residual block corresponding to the current image block.

Optionally, the first luma residual can be obtained by subtracting the predicted pixel value of the luma prediction block from the original luma block, followed by transformation, quantization, inverse transformation, and inverse quantization.

Optionally, after determining the first luma reconstruction pixel value of the luma reconstruction block corresponding to the current image block, the processing device can determine the filter coefficients of the filter used in the second prediction process using the first luma reconstruction pixel value and the aforementioned first chroma prediction pixel value.

Optionally, when the positions of the aforementioned first chroma prediction pixel and the first luma reconstruction pixel correspond to each other, that is, when the first chroma prediction pixel and the first luma prediction pixel are co-located pixels, the processing device can directly determine the aforementioned filter coefficients using the first luma reconstruction pixel value and the first chroma prediction pixel value.

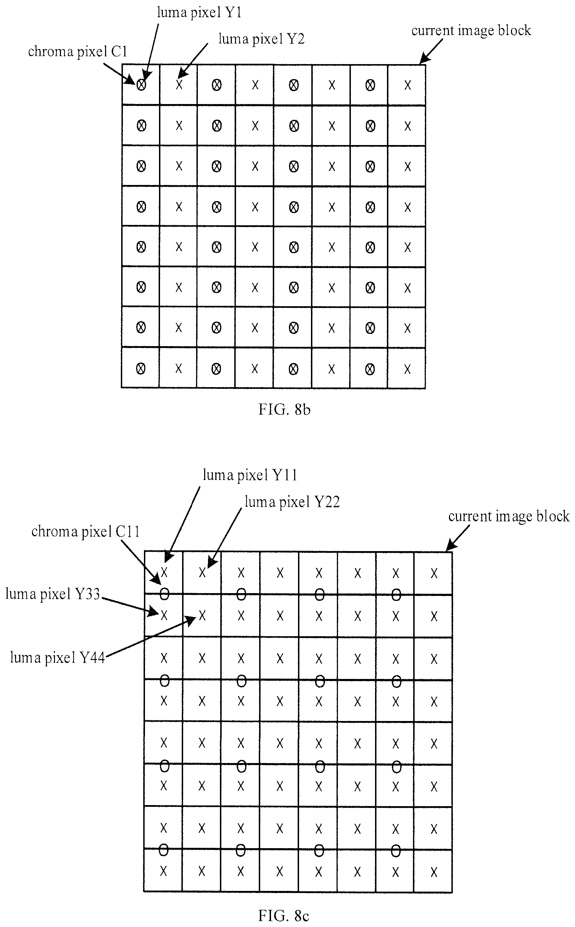

Optionally, as shown in FIG. 8a to FIG. 8c, the positional correspondence between the first chroma prediction pixel and the first luma prediction pixel is similar to the positional correspondence between luma pixel Y and chroma pixel C in FIG. 8a, or the positional correspondence between luma pixels Y1~Y2 and chroma pixel C1 in FIG. 8b, or the positional correspondence between luma pixels y11~y44 and chroma pixel c11 in FIG. 8c.

Optionally, the processing device can also determine the filter coefficients by downsampling the first luma reconstructed pixel values and the first chroma predicted pixel values obtained by downsampling the first luma reconstructed pixel values. Optionally, determining the filter coefficients directly using the first luma reconstructed pixel values and the first chroma predicted values means not downsampling the first luma reconstructed pixel values, but using the first luma reconstructed pixels to derive the filter coefficients.

Optionally, the processing device can also select a portion of the first luma reconstructed pixel values from the luma reconstructed block according to a predetermined reconstructed pixel selection rule, and determine the filter coefficients based on the determined/selected portion of the first luma reconstructed pixel values and the corresponding co-located first chroma pixel values.

Optionally, after determining the filter coefficients, the processing device can perform a second prediction process on the chroma prediction block corresponding to the current image block using the luma reconstructed pixel values and the filter coefficients, thereby determining the second chroma predicted pixel values of the chroma prediction block. Optionally, the processing device can further determine the residual of the chroma block corresponding to the current image block using the second chroma predicted pixel values for further entropy coding processing.

Optionally, the residual of the chroma block is the second chroma residual.

Optionally, the first pixel is the predicted pixel.

Optionally, the second pixel is the predicted pixel.

Optionally, the processing device can use the aforementioned first luma prediction pixel as the first pixel, and thereby determine or obtain the second pixel of the first component (i.e., the luma prediction pixel) and/or the second pixel of the second component (i.e., the chroma prediction pixel) based on the first luma prediction pixel and the filter coefficients.

Optionally, after determining the filter coefficients, the processing device can also perform a second prediction process on the chroma prediction block corresponding to the current image block using the aforementioned first luma prediction pixel value and the filter coefficients, thereby determining the second chroma prediction pixel value of the chroma prediction block.

Optionally, at the decoding end, for the luma block of the prediction unit corresponding to the current image block, the processing device can decode the prediction mode corresponding to the luma block from the bitstream, and determine the prediction result of the luma block (i.e., the first luma prediction pixel value) based on the prediction mode.

Optionally, for the chroma block of the prediction unit corresponding to the current image block, the processing device can decode the prediction mode corresponding to the chroma block from the bitstream, and determine the prediction result of the chroma block (i.e., the first chroma prediction pixel value) based on the prediction mode.

Optionally, the prediction mode decoded by the processing device from the bit stream is a prediction mode other than the prediction mode that undergoes a second prediction process. These prediction modes can be intra prediction modes and inter prediction modes, or a combination of intra prediction modes and inter prediction modes.

Optionally, the intra prediction mode includes at least one of the following: DC mode, planar mode, angle mode, and intra-block copy (IBC) mode. The main tasks of the inter prediction mode at the encoding end include motion estimation and motion compensation.

Optionally, the processing device can perform a first prediction process using the above-mentioned prediction modes to obtain the prediction results of the luma and chroma blocks corresponding to the current image block.

Optionally, the prediction modes for the luma and chroma blocks can be the same or different.

Optionally, after determining the prediction result of the luma block corresponding to the current image block (i.e., the first luma prediction pixel value), the processing device can determine the first luma reconstruction pixel value of the luma reconstruction block corresponding to the current image block based on the first luma prediction pixel value and the first luma residual corresponding to the current image block. Then, using the first luma reconstruction pixel value and the aforementioned first chroma prediction pixel value, the filter coefficients of the filter used in the second prediction process are determined.

Optionally, the first luma residual can be obtained from the compressed data in the decoded bitstream.

Optionally, when the positions of the first chroma prediction pixel and the first luma reconstruction pixel correspond to each other, the processing device can directly determine the filter coefficients using the first luma reconstruction pixel value and the first chroma prediction pixel value.

Optionally, the positions of the first chroma prediction pixel and the first luma reconstruction pixel corresponding to each other mean that the first chroma prediction pixel and the first luma prediction pixel are co-located pixels.

Optionally, as shown in FIG. 8a to FIG. 8c, the positional correspondence between the first chroma prediction pixel and the first luma prediction pixel is similar to the positional correspondence between luma pixel Y and chroma pixel C in FIG. 8a, or between luma pixels Y1~Y2 and chroma pixel C1 in FIG. 8b, or between luma pixels y11-y44 and chroma pixel c11 in FIG. 8c.

Optionally, the processing device can also determine the filter coefficients by downsampling the luma reconstruction pixel values obtained from the first luma reconstruction pixel values and the first chroma prediction pixel values.

Optionally, the processing device directly determining the filter coefficients using the first luma reconstruction pixel values and the first chroma prediction values means not downsampling the first luma reconstruction pixel values, but using the first luma reconstruction pixels to derive the filter coefficients.

Optionally, the processing device may also select a portion of the first luma reconstruction pixel values from the aforementioned luma reconstruction block according to a predetermined reconstruction pixel selection rule, and determine the filter coefficients of the filter based on the determined/selected portion of the first luma reconstruction pixel values and the corresponding co-located first chroma pixel values.

Optionally, after determining the filter coefficients, the processing device can perform a second prediction process on the chroma prediction block corresponding to the current image block using the reconstructed luma pixel values and the filter coefficients, thereby determining the second predicted pixel value of the chroma prediction block.

Optionally, the processing device can further determine the reconstructed pixel value of the chroma block corresponding to the current image block using the second predicted pixel value and the chroma residual corresponding to the current image block, to obtain the decoded image. Optionally, the chroma residual is the second chroma residual.

Third method: determining the filter coefficients based on the first predicted pixel of the first component, and the second predicted pixel of the first component and/or the second predicted pixel of the second component.

In this embodiment, when determining the filter coefficients, the processing device can determine the filter coefficients based on the first predicted pixel of the first component (i.e., the first luma prediction pixel) and the second predicted pixel of the first component (i.e., the second luma prediction pixel). Optionally, when determining the filter coefficients, the processing device can also determine the filter coefficients based on the first luma prediction pixel and the second predicted pixel of the second component (i.e., the chroma prediction pixel). Optionally, when determining the filter coefficients, the processing device can also determine the filter coefficients based on the combination of the first luma prediction pixel, the second luma prediction pixel, and the chroma prediction pixel.

Optionally, at the encoding end, for the luma block of the prediction unit corresponding to the current image block, the processing device can traverse all prediction modes except those used in the second prediction process to select the optimal prediction mode for the luma block, and determine the prediction result (i.e., the first luma prediction pixel value) of the luma block based on the optimal prediction mode.

Optionally, for the chroma block of the prediction unit corresponding to the current image block, the processing device can similarly traverse all prediction modes except those used in the second prediction process to select the optimal prediction mode for the chroma block, and determine the prediction result (i.e., the first chroma prediction pixel value) of the chroma block based on the optimal prediction mode.

Optionally, the prediction modes other than those used in the second prediction process can be intra prediction modes and inter prediction modes, or a combination of intra prediction modes and inter prediction modes.

Optionally, the intra prediction modes include at least one of the following: DC mode, planar mode, angle mode, intra-block copy (IBC) mode, etc. The main tasks of inter prediction mode at the encoding end include motion estimation and motion compensation.

Optionally, the processing device performs the first prediction process using a prediction mode other than the one used for the second prediction process, thus obtaining the prediction results for the luma block or chroma block.

Optionally, the prediction modes for the luma block and the chroma block can be the same or different.

Optionally, after determining the first luma prediction pixel value of the luma block corresponding to the current image block, the processing device can determine the first luma reconstruction pixel value of the luma reconstruction block corresponding to the current image block based on the first luma prediction pixel value and the first luma residual value of the first luma residual in the luma residual block corresponding to the current image block.

Optionally, the first luma residual can be obtained by subtracting the predicted pixel value of the luma prediction block from the original luma block, followed by transformation, quantization, inverse transformation, and inverse quantization.

Optionally, after determining the first luma prediction pixel value of the luma block corresponding to the current image block, the processing device can also directly determine the filter coefficients of the filter used in the second prediction process based on the first luma prediction pixel value and the aforementioned first chroma prediction pixel value.

Optionally, the processing device can also select the first luma prediction pixel value from the aforementioned luma prediction block according to a predetermined prediction pixel selection rule, and determine the filter coefficients of the filter based on the determined/selected first luma prediction pixel value and the corresponding corresponding first chroma pixel value.

Optionally, after determining the filter coefficients, the processing device can perform a second prediction process on the chroma prediction block corresponding to the current image block using the first luma reconstructed pixel value and the filter coefficients, thereby determining the second chroma prediction pixel value of the chroma prediction block.

Optionally, the processing device can also perform a second prediction process on the chroma prediction block using the first luma prediction pixel value and the filter coefficients, thereby determining the second predicted pixel value of the chroma prediction block.

Optionally, the first luma reconstructed pixel value is obtained by adding the first luma prediction pixel value and the corresponding residual.

Optionally, the processing device can further determine the residual of the chroma block corresponding to the current image block using the second chroma prediction pixel value determined by the second prediction process on the chroma prediction block, for further entropy coding processing.

Optionally, the residual of the chroma block (e.g., chroma residual) is the second chroma residual.

Optionally, at the decoding end, for the luma block of the prediction unit corresponding to the current image block, the processing device can decode the prediction mode corresponding to the luma block from the bitstream and determine the prediction result of the luma block (i.e., the first luma prediction pixel value) based on the prediction mode.

Optionally, for the chroma block of the prediction unit corresponding to the current image block, the processing device can decode the prediction mode corresponding to the chroma block from the bitstream and determine the prediction result of the chroma block (i.e., the first chroma prediction pixel value) based on the prediction mode.

Optionally, the prediction mode decoded by the processing device from the bitstream is a prediction mode other than the prediction mode used for the second prediction process. These prediction modes can be intra prediction modes and inter prediction modes, or a combination of intra prediction modes and inter prediction modes.

Optionally, the intra prediction modes include at least one of the following: DC mode, planar mode, angle mode, intra-block copy (IBC) mode, etc. The main tasks of the inter prediction mode at the encoding end include motion estimation and motion compensation.

Optionally, the processing device can perform a first prediction process using the prediction mode described above to obtain the prediction results of the luma block and chroma block corresponding to the current image block.

Optionally, the prediction mode for the luma block and the prediction mode for the chroma block can be the same or different.

Optionally, after determining the prediction result (i.e., the first luma predicted pixel value) of the luma block corresponding to the current image block, the processing device can determine the first luma reconstructed pixel value of the luma reconstruction block corresponding to the current image block based on the first luma predicted pixel value and the first luma residual corresponding to the current image block. Then, using the first luma reconstructed pixel value and the aforementioned first chroma predicted pixel value, the filter coefficients of the filter used in the second prediction process are determined.

Optionally, the first luma residual can be obtained from the compressed data in the decoded bitstream.

Optionally, the processing device can also downsample the first luma reconstructed pixel to obtain a downsampled first luma reconstructed pixel, and use the first luma reconstructed pixel value and the first chroma reconstructed pixel value of the downsampled first luma reconstructed pixel to determine the filter coefficients.

Optionally, the processing device can also select a portion of the first luma reconstructed pixel values from the aforementioned luma reconstruction block according to a predetermined reconstructed pixel selection rule, and determine the filter coefficients of the filter based on the determined/selected portion of the first luma reconstructed pixel values and the corresponding co-located first chroma pixel values.

Optionally, the first pixel is a reconstructed pixel.

Optionally, the second pixel is a reconstructed pixel.

Optionally, the processing device can use the aforementioned first luma reconstructed pixel as the first pixel, and then, based on the first luma reconstructed pixel and filter coefficients, determine or obtain the second pixel of the first component (i.e., the luma reconstructed pixel) and/or the second pixel of the second component (i.e., the chroma reconstructed pixel).

Optionally, after determining the filter coefficients, the processing device can perform a second prediction process on the chroma prediction block corresponding to the current image block using the first luma reconstructed pixel value and the filter coefficients, thereby determining the second predicted pixel value of the chroma prediction block. Furthermore, it can determine the chroma reconstructed pixel value of the chroma block corresponding to the current image block using the second predicted pixel value and the chroma residual corresponding to the current image block. The processing device then performs in-loop filtering on the chroma reconstructed pixel value to obtain the decoded image. Optionally, the chroma residual is the second chroma residual.

Optionally, the chroma residual can be obtained from the compressed data in the decoded bitstream.

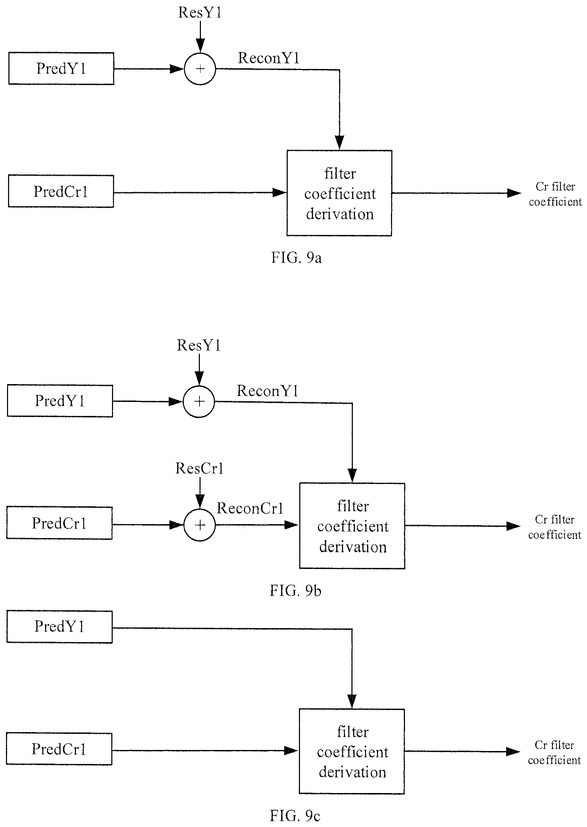

Optionally, the processing device can determine the filter coefficients according to the principle described below. That is, as shown in FIG. 9a to FIG. 9c, the processing device can predict the chroma component Cr using the luma component Y, or predict the chroma component Cb using the luma component Y, or predict the chroma component Cb using the chroma component Cr.

Optionally, as shown in FIG. 9a, the processing device obtains the luma reconstruction pixel ReconY1 by adding the luma prediction pixel PredY1 and the luma residual ResY1, and then determines or obtains the filter coefficients for the chroma component Cr using the luma reconstruction pixel ReconY1 and the chroma prediction pixel PredCr1.

Optionally, if the video format corresponds to YUV444, YUV422, and YUV420, then the predicted pixel value of the luma prediction pixel PredY1 can correspond to the first luma prediction pixel value mentioned in the second method, the residual value of the luma residual ResY1 can correspond to the first luma residual value mentioned in the second method, the pixel value of the luma reconstruction pixel ReconY1 can correspond to the first luma reconstruction pixel value mentioned in the second method, and the predicted pixel value of the chroma prediction pixel PredCr1 can correspond to the first chroma prediction pixel value mentioned in the second method.

Optionally, if the video format only corresponds to YUV422 and YUV420, then the luma prediction pixel value of the luma prediction pixel PredY1 can correspond to the downsampled luma reconstruction pixel value obtained by downsampling the first luma reconstruction pixel value mentioned in the second method.

Optionally, in the process of determining the filter coefficients shown in FIG. 9a, there can be at least one luma prediction pixel PredY1, and the number of chroma prediction pixels PredCr1 can also be at least one.

Optionally, the number of luma prediction pixels PredY1 and the number of chroma prediction pixels PredCr1 may be the same or different.

Optionally, the positions of the luma prediction pixels PredY1, the luma reconstruction pixels ReconY1, and the chroma prediction pixels PredCr1 correspond to each other.

Optionally, as shown in FIG. 9b, the processing device may also obtain the luma reconstruction pixel ReconY1 by adding the luma prediction pixels PredY1 and the luma residual ResY1. And it may obtain the chroma reconstruction pixel ReconCr1 by adding the chroma prediction pixels PredCr1 and the chroma residual ResCr1. Then, the filter coefficients of the chroma component Cr are determined or obtained using the luma reconstruction pixels ReconY1 and the chroma reconstruction pixels ReconCr1.

Optionally, when the video format can correspond to YUV444, YUV422, and YUV420, the values of the luma prediction pixel PredY1, luma residual ResY1, and luma reconstruction pixel ReconY1 can each correspond to the first luma prediction pixel value, the first luma residual value, and the first luma reconstruction pixel value mentioned in the first method above. The values of the chroma prediction pixel PredCr1, chroma residual ResCr1, and chroma reconstruction pixel ReconCr1 can each correspond to the first chroma prediction pixel value, the first chroma residual value, and the first chroma reconstruction pixel value mentioned in the first method above. The values of the luma reconstruction pixel ReconY1 and the chroma reconstruction pixel ReconCr1 can each correspond to the first luma reconstruction pixel value and the first chroma reconstruction pixel value mentioned in the first method above.

Optionally, when the video format corresponds to YUV422 and YUV420, the values of the luma reconstruction pixel ReconY1 and the chroma reconstruction pixel ReconCr1 can correspond to the downsampled luma reconstruction pixel value obtained after downsampling the first luma reconstruction pixel in the first method described above.

Optionally, in the process of determining the filter coefficients shown in FIG. 9b, the number of luma prediction pixels PredY1 can be at least one, and the number of chroma prediction pixels PredCr1 can also be at least one. The number of luma prediction pixels PredY1 and the number of chroma prediction pixels PredCr1 can be the same or different, and the positions of the luma prediction pixels PredY1, luma reconstruction pixels ReconY1, and chroma prediction pixels PredCr1 also correspond to each other.

Optionally, as shown in FIG. 9c, the processing device can directly determine or obtain the filter coefficients of the chroma component Cr using the luma prediction pixels PredY1 and chroma prediction pixels PredCr1.

Optionally, when the video format can correspond to YUV444, YUV422, and YUV420, the values of the luma prediction pixel PredY1 and the chroma prediction pixel PredCr1 can each correspond to the first luma prediction pixel value and the first chroma prediction pixel value mentioned in the third method above.

Optionally, when the video format corresponds to YUV422 and YUV420, the luma prediction pixel PredY1 and the chroma prediction pixel PredCr1 can correspond to the downsampled luma reconstruction pixel value obtained after downsampling the first luma reconstruction pixel mentioned in the third method above.

Optionally, in the process of determining the filter coefficients shown in FIG. 9c, the number of luma prediction pixels PredY1 can be at least one, and the number of chroma prediction pixels PredCr1 can also be at least one. The number of luma prediction pixels PredY1 and the number of chroma prediction pixels PredCr1 can be the same or different, and the positions of the luma prediction pixels PredY1, luma reconstruction pixels ReconY1, and chroma prediction pixels PredCr1 also correspond to each other.

Optionally, when the processing device performs a second prediction process on the current image block based on the first pixel and the filter coefficients to determine the predicted pixel value of the prediction block corresponding to the current image, the processing device can adopt a filter model of the form shown in formula (2):

$$\text{Chroma} = f(c_1 * \text{Luma1}, c_2 * \text{Luma2}, c_3 * \text{Luma3}, ..., c_N * \text{LumaN}) \quad (2)$$

Optionally, Luma1~LumaN are luma pixels, Chroma is a chroma pixel, Luma1 is the luma pixel in the same position as Chroma in formula (2), and Luma2~LumaN are other luma pixels. Optionally, Luma2~LumaN can be luma pixels surrounding luma pixel Luma1.

Optionally, the processing device can also adopt a filter model in the form of formula (3) as follows:

$$\text{Chroma} = c_1 * \text{Luma1} + c_2 * \text{Luma2} + c_3 * \text{Luma3} + c_4 * \text{Luma4} + c_5 * \text{Luma5} + c_6 * P_1 + c_7 * P_2 + c_8 * P_3 + c_9 * P_4 + c_{10} * P_5 + c_{11} * B \quad (3)$$

Optionally, c1~c11 are filter coefficients, Luma1~Luma5 are reference luma pixels, and P1~P5 are nonlinear terms. Optionally, P1~P5 are the squares of the pixel values of the reference luma pixel Luma1. Optionally, P1 is the square of the pixel value of the reference luma pixel Luma1, scaled to the bit depth range. That is, P1 = (Luma1*Luma1 + midVal) >> bitDepth; bitDepth is the bit depth corresponding to the sample, and ">>" is the right shift sign. Optionally, for 10-bit video content, P is calculated by the following formula:

$$P = (\text{Luma1} * \text{Luma1} + 512) >> 10.$$

Optionally, P2-P5 can also be the squares of the pixel values of the reference luma pixel Luma1, scaled to the bit depth range.

Optionally, formula (3) may also include a bias term B. The bias term B can be 0.

Optionally, the bias term B can also be other predetermined values (e.g., for 10-bit video, the bias term B can be set to 512).

Optionally, the processing device can also adopt a filter model of the form shown in formula (4):

$$\text{Chroma} = c_1 * \text{Luma1} + c_2 * \text{Luma2} + c_3 * \text{Luma3} + c_4 * \text{Luma4} + c_5 * \text{Luma5} + c_6 * \text{LocX1} + c_7 * \text{LocY1} + c_8 * P_1 + c_9 * B \quad (4)$$

Optionally, c1-c9 are filter coefficients, and Lumat1~Luma5 are reference luma pixels. LocX1 and LocY1 are the horizontal and vertical position information of Luma1. P1 is a nonlinear term. Optionally, P1 is the square of the pixel value of the reference luma pixel Luma1, scaled to the bit depth range. That is, P1 = (Luma1*Luma1 + midVal) >> bitDepth;

bitDepth is the bit depth corresponding to the sample, and ">>" is the right shift sign. Optionally, for 10-bit video content, P = (Luma1*Luma1 + 512) >> 10. Optionally, the bias term B can be 0 or other predetermined values (e.g., for 10-bit video, the bias term B can be set to 512).

Optionally, LocX1 and LocY2 can also be the horizontal and vertical position information of the pixel to be predicted PreChroma.

Optionally, the processing device may also adopt a filter model of the form shown in formula (5):

$$\text{Chroma} = c1*\text{Luma1} + c2*\text{GLX1} + c3*\text{GLY1} + c4*P3 + c5*P4 + c6*P5 + c7*B \quad (5)$$

Optionally, c1~c7 are filter coefficients. Luma1 is the co-located reference luma pixel of the chroma pixel to be predicted. GLX1 and GLY1 are the horizontal and vertical gradient information of Luma1, respectively. P1 is a nonlinear term. Optionally, for 10-bit video content, P = (Luma1*Luma1 + 512) >> 10. Optionally, the bias term B can be 0 or other predetermined values (e.g., for 10-bit video, the bias term B can be set to 512).

Optionally, if the chroma pixel to be predicted is the chroma pixel in FIG. 8a, then its co-located reference luma pixel is the luma pixel at the same position. If the chroma pixel to be predicted is the chroma pixel in FIG. 8b, then its co-located reference luma pixel is the luma pixel corresponding to its position.

Optionally, the luma pixel corresponding to the position of chroma pixel C1 can be luma pixel Y1 or luma pixel Y2. If the chroma pixel to be predicted is the chroma pixel in FIG. 8c, then its co-located luma pixel is the luma pixel at its position.

Optionally, the luma pixel corresponding to the chroma pixel C11 can be a luma pixel from Y11 to Y44.

Optionally, the luma pixel corresponding to the chroma pixel C11 can be a luma pixel Y11 or a luma pixel Y33.

Optionally, the gradients GLX1 and GLY1 can be calculated as follows:

$$\text{GLX1} = (2\text{Luma5} + \text{Luma2} + \text{Luma7}) - (2\text{Luma6} + \text{Luma4} + \text{Luma9});$$

$$\text{GLY1} = (2\text{Luma3} + \text{Luma2} + \text{Luma4}) - (2\text{Luma8} + \text{Luma7} + \text{Luma9}).$$

Optionally, as shown in FIG. 10, Luma2 is the luma pixel at the top left of Luma1, Luma3 is the luma pixel at the top of Luma1, Luma4 is the luma pixel at the top right of Luma1, Luma5 is the luma pixel at the left of Luma1, Luma6 is the luma pixel at the right of Luma1, Luma7 is the luma pixel at the bottom left of Luma1, Luma8 is the luma pixel at the bottom of Luma1, and Luma9 is the luma pixel at the bottom right of Luma1.

In this embodiment, existing technologies require determining a reference region to calculate filter coefficients, and then using the reconstructed pixels selected within that reference region to determine the filter coefficients. When the distribution pattern of the reconstructed pixels selected in the reference region differs significantly from the distribution pattern of pixels in the current block, the filter coefficients determined through the reference region can affect the accuracy of the cross-component prediction mode or the same-component prediction mode. Therefore, the image processing method of the present application utilizes pixels in the current image block to determine the filter coefficients, which can improve the accuracy of the filter model selected in the cross-component prediction mode or the same-component prediction mode when subsequently predicting the current image block.

Third embodiment

In this embodiment, the image processing method is still described using a processing device as the execution entity. Based on any of the above embodiments, the image processing method may further include:

the first reconstructed pixel is the reconstructed pixel with the largest first component or the reconstructed pixel with the smallest first component.

Optionally, during the process of determining the filter coefficients, the first reconstructed pixel of the first component used by the processing device may be the largest reconstructed pixel in the reconstructed image block of the first component corresponding to the current image block. Optionally, the first reconstructed pixel of the first component used by the processing device may also be the smallest reconstructed pixel in the reconstructed image block of the first component corresponding to the current image block.

Optionally, the image processing method may also include:

the first reconstructed pixel is a reconstructed pixel in a predetermined region.

Optionally, during the process of determining the filter coefficients, the first reconstructed pixel of the first component used by the processing device may also be a reconstructed pixel in a predetermined region. Optionally, the predetermined region is the current image block or a sub-block or sub-region of the current image block.

Optionally, the image processing method may further include:
the first reconstructed pixel is the largest reconstructed pixel of the first component or the smallest reconstructed pixel of the first component determined in the predetermined region.

Optionally, during the process of determining the filter coefficients, the first reconstructed pixel of the first component used by the processing device may also be the largest reconstructed pixel of the first component or the smallest reconstructed pixel of the first component determined in the aforementioned predetermined region.

Optionally, the processing device may use predicted pixels and/or reconstructed pixels of the current image block or a sub-block or sub-region of the current image block as the first predicted pixels and/or the first reconstructed pixels to determine the filter coefficients.

Optionally, the processing device may determine the predicted pixels of the luma prediction block and the chroma prediction block corresponding to the current image block, and/or determine the reconstructed pixels of the luma reconstruction block and the chroma reconstruction block corresponding to the current image block, using them as the first predicted pixels and/or the first reconstructed pixels to determine the filter coefficients.

Optionally, if the processing device uses some luma reconstructed pixels and some chroma reconstructed pixels in the luma reconstruction block to determine the filter coefficients, it may select some luma reconstructed pixels and some chroma reconstructed pixels according to a preset rule.

Optionally, if the processing device uses some luma reconstruction pixels and some chroma prediction pixels in the luma reconstruction block to determine the filter coefficients, it can also select some luma reconstruction pixels and some chroma prediction pixels according to a preset rule.

Optionally, if the processing device uses some luma prediction pixels and some chroma prediction pixels in the luma reconstruction unit, it can also select some luma prediction pixels and some chroma prediction pixels according to a preset rule.

Optionally, assuming the current image block is the corresponding reconstruction block or prediction block in the coding unit, then as described above, the first pixel of the first component can be a partially reconstructed luma pixel, a partially reconstructed chroma pixel, a partially predicted luma pixel, or a partially predicted chroma pixel.

Optionally, referring to FIG. 11a to FIG. 11c, the size of luma image block A1 is 4x4, the size of luma image block A2 is 8x8, and the size of luma image block A3 is 16x16. The processing device can select the four pixels at their respective upper left, lower left, upper right, and lower right corners as luma pixels y1 within luma image block A1. Then, the processing device determines the co-located chroma pixel c1 (not shown in the figure) of the luma pixel y1 in the corresponding chroma image block based on these luma pixels y1, thereby using the luma pixel y1 as the first reconstructed pixel/first predicted pixel Luma1 of the first component in the above formula (2), and using the co-located chroma pixel c1 of the luma pixel y1 as the second predicted pixel Chroma of the second component in the above formula (2), thereby determining the filter coefficients in formula (2) through the above luma pixel y1 and its co-located chroma pixel c2.

Optionally, the processing device can also select the four pixels at the top left, bottom left, top right, and bottom right corners of each of the luma image blocks A2 as luma pixels y2, and determine the co-located chroma pixels c2 (not shown in the figure) of these luma pixels y2 in the corresponding chroma image blocks. Then, the processing device uses the luma pixel y2 as the first reconstructed pixel/first predicted pixel Luma1 of the first component in the above formula (2), and uses the co-located chroma pixel c2 of the luma pixel y2 as the second predicted pixel Chroma of the second component in the above formula (2), thereby determining the filter coefficients in formula (2) through the above luma pixel y2 and its co-located chroma pixel c2.

Optionally, the processing device can also determine luma pixel y3 in the luma image block A3 and chroma pixel c3 in the corresponding chroma image block, so as to determine the filter coefficients in formula (2) based on the luma pixel y3 and the chroma pixel c3.

Optionally, the processing device can also select pixels surrounding the four pixels at their respective upper left, lower left, upper right, and lower right corners in the aforementioned luma image blocks as selected luma pixels as luma pixels Luma1 in formula (2), and determine the co-located chroma pixels (not shown in the figure) of these luma pixels in the corresponding chroma image blocks based on these luma pixels, so as to determine the filter coefficients in formula (2) based on these luma pixels and the co-located chroma pixels.

Optionally, the processing device can also select other luma pixels on the boundary pixels of the luma image block (such as pixels in the middle of the boundary pixel row/column) as luma pixels for determining filter coefficients, and the co-located chroma pixels of the luma pixels as chroma pixels for determining filter coefficients. Optionally, the processing device can select other luma pixels on the boundary pixels of the luma image block (such as pixels in the middle of the boundary pixel row/column) as luma pixel y3, and the co-located chroma pixels of luma pixel y3 as chroma pixel c3 (not shown in the figure). Then, the luma pixel y3 is used as the first reconstructed pixel/first predicted pixel Luma1 of the first component in the above formula (2), and the co-located chroma pixel c3 of luma pixel y3 is used as the second predicted pixel Chroma of the second component in the above formula (2), thereby determining the filter coefficients in formula (2) through the luma pixel y3 and its co-located chroma pixel c3.

Optionally, the processing device can select the pixel in the middle of the luma image block A1-A3 as luma pixels y1-y3, and the co-located chroma pixels of luma pixels y1-y3 as chroma pixels c1-c3 (not shown in the figure). Then, the processing device uses luma pixels y1-y3 as Luma1 in formula (2), and uses the co-located chroma pixels c1~c3 of luma pixels y1~y3 as Chroma in formula (2), thereby determining the filter coefficients in formula (2) through luma pixels y1~y3 and their co-located chroma pixels c1~c2.

Optionally, the processing device may further select the pixel with the maximum pixel value and/or the pixel with the minimum pixel value among the boundary pixels of the luma image blocks A1~A3 as the luma pixel y, and the co-located chroma pixel c of the luma pixel y as the first reconstructed pixel/first predicted pixel Luma1 of the first component in the above formula (2), and the second predicted pixel Chroma of the second component in the above formula (2.1), respectively, to determine the filter coefficients based on the luma pixel y and the co-located chroma pixel c.

Optionally, the processing device may further select the pixel with the maximum pixel value and/or the pixel with the minimum pixel value among all luma pixels of the luma image blocks A1~A3 as the luma pixel y, and the luma pixel y and the co-located chroma pixel c of the luma pixel y as the first reconstructed pixel/first predicted pixel Luma1 of the first component in the above formula (2), and the second predicted pixel Chroma of the second component in the above formula (2.1), respectively, to determine the filter coefficients based on the luma pixel y and the co-located chroma pixel c.

Optionally, for video images in video formats YUV422 and YUV420, the processing device can downsample the luma prediction block and/or the luma reconstruction block to obtain a downsampled reconstruction block, and select luma pixels in the downsampled reconstruction block to determine the filter coefficients.

Optionally, the processing device can downsample the luma image block corresponding to the current image block to obtain a downsampled luma image block. Then, the luma pixels in the downsampled luma image block are used as luma pixels to determine the filter coefficients (e.g., Luma1 in formula (2) above), and the corresponding chroma pixels (co-located luma pixels) are further determined based on these luma pixels, thereby determining the filter coefficients based on these luma pixels and the corresponding chroma pixels.

Optionally, the aforementioned luma image block can be the luma reconstruction block or the luma prediction block corresponding to the current image block.

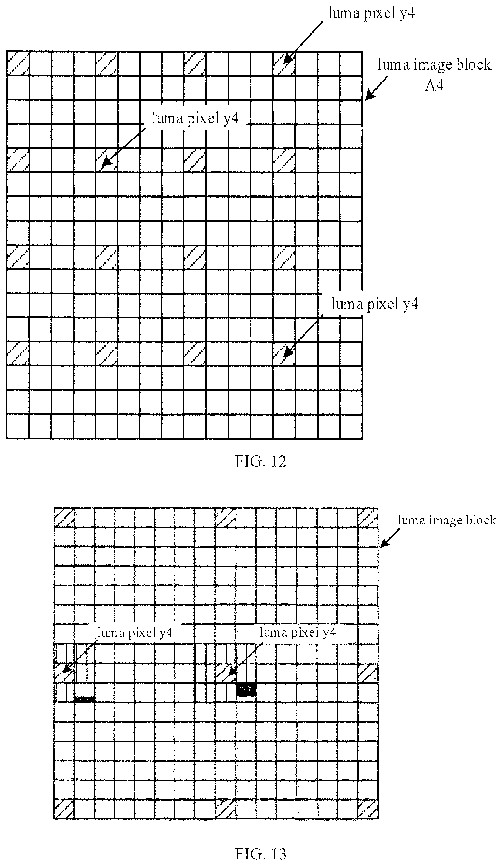

Optionally, referring to FIG. 12, in the luma image block A4, the processing device can sample by selecting one pixel every predetermined number of pixels (e.g., 4 pixels) in the horizontal direction and one pixel every predetermined number of pixels (e.g., 4 pixels) in the vertical direction, to obtain multiple luma pixels (e.g., 16 shadow luma pixels in the figure) as the sampled luma pixels. Next, the processing device uses these sampled luma pixels to determine the corresponding chroma pixels (such as the co-located luma pixels), and substitutes these sampled luma pixels and the corresponding chroma pixels into the above formula (2) to determine the filter coefficients.

Optionally, the processing device may determine the filter coefficients using only a subset of the selected luma pixels and their corresponding chroma pixels.

Optionally, as shown in FIG. 13, if the processing device uses the luma pixel y4 as the luma pixel Luma1 in the same position as the chroma pixel Chroma, the processing device can select Luma2~LumaN around the luma pixel y4 (pixels with vertical shadows around the luma pixel y4 as shown in FIG. 13).

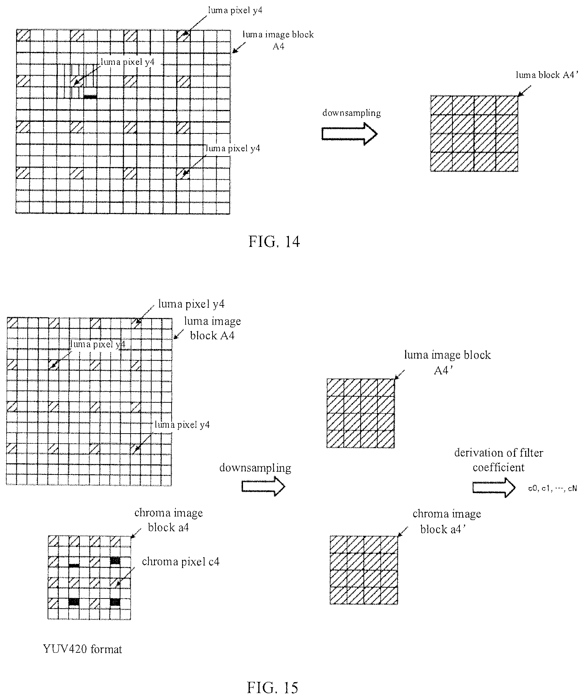

Optionally, as shown in FIG. 14, the processing device may downsample luma image block A4 to obtain a downsampled luma image block A4'. That is, the processing device may directly use multiple luma pixels y4 in luma block A4 as luma pixels in luma image block A4'. The pixels in the downsampled luma image block A4' are used as the luma pixel Luma1 corresponding to the chroma pixel y4 to be predicted. The selection of Luma2~LumaN consists of luma pixels surrounding luma pixel y4 in the un-downsampled luma image block, as shown by the vertical shaded pixels in FIG. 14.

Optionally, if luma pixel y4 is located at the edge of a luma image block and there are adjacent luma pixels not in the same image block as luma pixel y4, the processing device can select the adjacent luma pixel in another image block, or use a pixel value determined by a preset rule as the pixel value of the adjacent luma pixel in the same image block as luma pixel y4.

Optionally, as shown in FIG. 14, if luma pixel y4 is located on the left boundary of an image block, there are no left adjacent luma pixels in the same image block as luma pixel y4. In this case, the processing device can select the left adjacent luma pixels of luma pixel y4 in an adjacent image block as Luma2~LumaN in formula (2), or use the value of luma pixel y4 as the pixel value of its left adjacent luma pixel.

Optionally, if the processing device selects the pixels surrounding the four pixels at the top left, bottom left, top right, and bottom right corners of each of the aforementioned luma image blocks as selected luma pixels (Luma1) in Formula (2), and determines the co-located chroma pixels (not shown in the figure) of these luma pixels in the corresponding chroma image blocks to determine the filter coefficients in Formula (2) based on these luma pixels and their co-located chroma pixels, then the selected luma pixels are those adjacent vertically, horizontally, vertically, horizontally, or diagonally to the four pixels at the top left, bottom left, top right, and bottom right corners of the current image block, and the selected luma pixels adjacent vertically, horizontally, vertically, horizontally, and diagonally are all located within the current image block. Next, one or more of the selected luma pixels adjacent vertically, horizontally, horizontally, and diagonally are used as Luma2~LumaN in Formula (2). In this way, the situation where the adjacent pixels of the selected luma pixels are not within the current image block is avoided.

Optionally, as shown in FIG. 15, after determining the luma pixels used to derive the filter coefficients according to the preset rule (such as upsampling), the processing device can further determine the chroma pixels in the same position as these luma pixels (such as the chroma pixel c4 of the chroma image block a4 in FIG. 15). Next, based on the luma pixel y4 determined in FIG. 15, the pixels surrounding luma pixel y4 in FIG. 13 and FIG. 14 (the shaded luma pixels), and the chroma pixel c4 in FIG. 15, the filter coefficients c0, c1, ..., cN are derived.

Optionally, the rules used by the processing device to select luma pixels can also be combined to select pixels used to determine the filter coefficients.

Optionally, after determining/selecting the luma pixel and/or the corresponding chroma pixel, the processing device can substitute these luma pixels and/or chroma pixels into the above-mentioned formulas (2), (3), (4), or (5) to obtain a system of formulas, and then determine the filter coefficients used for the second prediction process of the current image block by solving the system of formulas. Optionally, the number of pixel pairs composed of luma pixels and chroma pixels selected by the processing device needs to be greater than or equal to the number of filter coefficients in the above-mentioned formulas (2), (3), (4), or (5) used by the processing device, so that the processing device can solve the corresponding system of formulas to determine the values of the filter coefficients.

Optionally, assuming that the processing device determines the filter coefficients using the above formula (3), since the above formula (3) has the form Chroma=L·c, where Chroma is $[Chroma_1, Chroma_2, ..., Chroma_N]^T$, which is a vector composed of chroma pixels. c is $[c_0, c_1, ..., c_9, c_{10}]^T$, which is the filter coefficient. L is a matrix composed of luma pixels. Optionally, L can be:

$$L = \begin{pmatrix} Luma_{1,1} & Luma_{1,2} & ... & P_{1,5} & B_1 \\ Luma_{2,1} & Luma_{2,2} & ... & P_{2,5} & B_2 \\ \vdots & \vdots & \ddots & \vdots & \vdots \\ Luma_{N,1} & Luma_{N,2} & ... & P_{N,5} & B_N \end{pmatrix}$$

Thus, the processing device can determine or obtain the values of the filter coefficients through $c = (L^T \cdot L)^{-1} \cdot L^T \cdot Chroma$.

Optionally, the image processing method may further include at least one of the following:

the first reconstructed pixel is different from the first pixel;

the first predicted pixel is different from the first pixel;

the first reconstructed pixel is the same as the first pixel;

the first predicted pixel is the same as the first pixel.

Optionally, after determining the first reconstructed pixel or the first predicted pixel for determining the filter coefficients through the above operations, and determining the filter coefficients based on the first reconstructed pixel or the first predicted pixel, the processing device can further determine/select a new reconstructed pixel or predicted pixel, and then perform a second prediction process on the current image block based on the filter coefficients and the new reconstructed pixel or predicted pixel.

Optionally, the processing device can also directly use the first reconstructed pixel or the first predicted pixel determined through the above operations for determining the filter coefficients as the first pixel for performing a second prediction process on the prediction block corresponding to the current image block, thereby determining or obtaining the second pixel of the first component (i.e., the luma prediction pixel), or determining or obtaining the second pixel of the second component (i.e., the chroma prediction pixel).

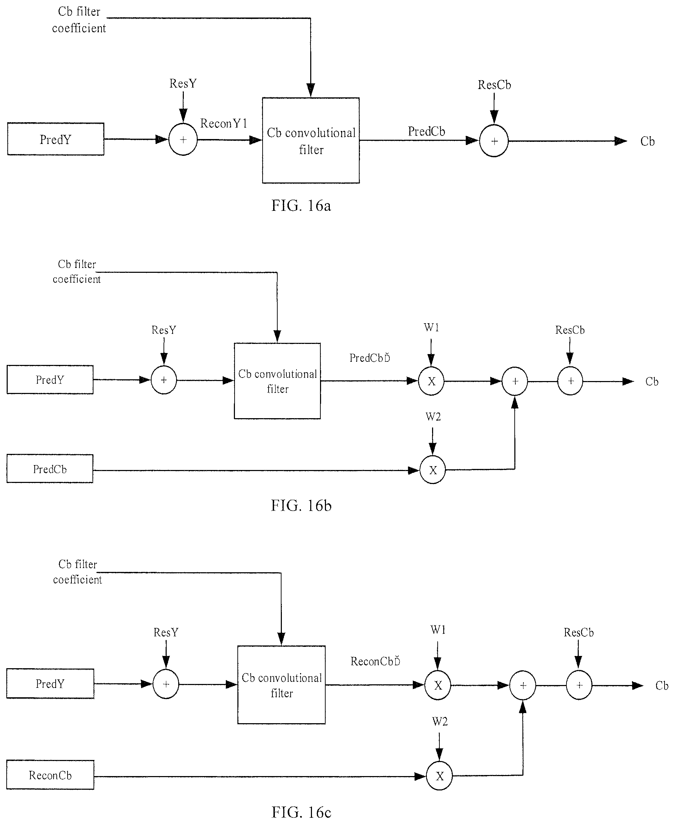

Optionally, since the processing device can determine the filter model corresponding to formula (2) through the determined filter coefficients, as shown in FIG. 16a, in this filter model, the processing device can use the determined reconstructed pixel value as input, and thus determine the output of the filter model through formula (2). This output is the second chroma prediction value of the chroma prediction block obtained by the second prediction process.

Optionally, the reconstructed pixels input to the filter model can be all reconstructed pixels corresponding to the current image block, determined based on the predicted pixel value corresponding to the current image block and the residual value of the first residual corresponding to the current image block; optionally, they can be partially reconstructed pixels.

Optionally, if the processing device inputs partially reconstructed pixels to the filter model, these partially reconstructed pixels are those other than those used by the processing device to pre-determine the filter coefficients.

Optionally, if the processing device inputs partially reconstructed pixels to the filter model, these partially reconstructed pixels can also be reconstructed pixels other than those corresponding to the predicted pixels used by the processing device to pre-determine the filter coefficients.

Optionally, as shown in FIG. 16b, the second prediction process performed by the processing device for the current image block may further include weighted processing.

Optionally, after performing the first prediction process to determine the chroma prediction pixel value, the processing device may weight the chroma prediction pixels obtained from the first prediction according to preset weights to obtain weighted chroma prediction pixels. Then, the processing device can obtain the chroma reconstructed pixel value of the chroma reconstructed pixel through the residual ResCb, which can be used for subsequent second prediction process of the current portrait block.

Optionally, if the processing device uses all the reconstructed pixels used to determine the filter coefficients to perform a second prediction process on the current image block, then the processing device can also use the second chroma prediction pixel values obtained through these reconstructed pixels as the prediction pixel values of the prediction pixels of the chroma prediction block corresponding to the current image block for subsequent image encoding or decoding processing.

Optionally, if the processing device only uses the reconstructed pixels other than those used to determine the filter coefficients for the second prediction process, then for chroma prediction pixels that have not undergone the second prediction process, the processing device can directly use the chroma prediction pixel values determined in the first prediction process as the pixel values of these prediction pixels that have not undergone the second prediction process, and combine them with the second chroma prediction pixel values determined in the second prediction process to obtain a chroma image block (such as a chroma prediction image block) for subsequent image encoding or decoding processing.

In this embodiment, the image processing method, when predicting the chroma and/or luma components of the image block, acquires or determines the predicted or reconstructed pixels in the current image block, and then makes predictions for the current image block based on the pixel values of the predicted or reconstructed pixels. This fully considers the correlation between the reference pixels of the known luma components in the current image block and the pixels to be predicted, effectively avoiding the problem of low prediction accuracy caused by the large difference between the distribution pattern of the reconstructed pixels selected in the reference region and the distribution pattern of the pixels in the current block when determining the filter coefficients by determining the reference pixels in the reference region in the traditional method. This improves the accuracy of the prediction results of the luma component or the chroma component of the current image block.

Fourth embodiment

In this embodiment, the image processing method is still described using a processing device as the execution entity. Based on any of the above embodiments, the method for determining the first pixel may include:

determining the first pixel based on the third reconstructed pixel or the third predicted pixel of the first component.

Optionally, the third reconstructed pixel or the third predicted pixel of the first component may be a luma reconstructed pixel or a luma predicted pixel determined or selected by the processing device during the process of determining or selecting reconstructed pixels or predicted pixels to determine the filter. The processing device may directly use this third reconstructed pixel or the third predicted pixel as the first pixel and perform a second prediction process on the current image block together with the determined filter coefficients.

Optionally, the method for determining the first pixel may further include:

determining the first pixel based on the downsampled pixel of the third reconstructed pixel or the third predicted pixel.

Optionally, during the process of determining or selecting reconstructed pixels or predicted pixels to determine the filter, the processing device may, after downsampling the determined or selected luma reconstructed pixels or luma predicted pixels (i.e., the downsampled pixel of the third reconstructed pixel or third predicted pixel), use this downsampled pixel as the first pixel and, together with the determined filter coefficients, perform a second prediction process on the current image block.

Optionally, the method for determining the first pixel may further include:

determining the first pixel based on a fourth predicted pixel determined or obtained through intra prediction or inter prediction of the current image block.

Optionally, in addition to determining the luma reconstruction pixel or luma prediction pixel used to determine the filter as the first pixel for the second prediction process, the processing device can also directly use the fourth prediction pixel, determined or obtained by performing intra prediction or inter prediction for the current image block, as the first pixel, and perform the second prediction process on the current image block together with the determined filter coefficients.

Optionally, the processing device can also combine the third reconstruction pixel or third prediction pixel, the downsampled pixel of the third reconstruction pixel or third prediction pixel, and the fourth prediction pixel as the first pixel, and input them into the filter model to perform the second prediction process on the current image block. That is, the filter model outputs the prediction result (i.e., luma prediction pixel value and/or chroma prediction pixel value) of the prediction block corresponding to the current image block.

Optionally, based on at least one embodiment of the first, second, and third embodiments, the image processing method further includes:

determining or obtaining the reconstructed image block corresponding to the current image block based on the second pixel;

determining or obtaining the reconstructed pixel of the first component and/or the reconstructed pixel of the second component based on the reconstructed pixel of the first component of the reconstructed image block.

Optionally, after the processing device performs a second prediction process on the current image block to determine or obtain the second pixel (luma prediction pixel value and/or chroma prediction pixel value) of the prediction block corresponding to the current image block, the processing device can further determine or obtain the reconstructed image block corresponding to the current image block based on the residual between the second pixel and the current image block; then, the processing device can further determine or obtain the reconstructed pixel of the first component and/or the reconstructed pixel of the second component based on the reconstructed pixel of the first component of the reconstructed image block (i.e., luma reconstruction pixel value).

Optionally, the processing device may perform a first prediction process for the current image block to determine or obtain a reconstructed image block. The reconstructed image block includes a luma reconstructed image block and a chroma reconstructed image block. Subsequently, the processing device further determines or obtains a luma reconstructed pixel L2 of the first component of the luma reconstructed image block and/or a chroma reconstructed pixel C1 of the second component of the chroma reconstructed image block based on the luma reconstructed pixel L1 (i.e., the luma reconstructed pixel value) of the first component of the luma reconstructed image block. Optionally, the processing device does not need to perform the second prediction process mentioned in the embodiments of the present application for the current image block.

Optionally, the method for determining the filter coefficients described above is the method for determining filter coefficients mentioned in the embodiments of the present application. In one embodiment, a luma reconstruction pixel L1' and a chroma reconstruction pixel C1' are selected from the reconstructed image blocks (i.e., the reconstructed luma image block and the reconstructed chroma image block), and the filter coefficients are determined based on the luma reconstruction pixel L1' and the chroma reconstruction pixel C1'. The method for selecting the luma reconstruction pixel L1' and the chroma reconstruction pixel C1' is similar to the method described in FIG. 11a to FIG. 15 and the corresponding related paragraphs. The method for determining the filter coefficients based on the luma reconstruction pixel L1' and the chroma reconstruction pixel C1' is similar to the method for deriving the filter coefficients using the luma reconstruction pixel ReconY1 and the chroma reconstruction pixel ReconCr1 in FIG. 9b and its related paragraphs. For the sake of brevity, further details are omitted. Luma reconstructed pixels L1 and L1' in the luma reconstructed image block and chroma reconstructed pixel C1' in the chroma reconstructed image block are reconstructed pixels obtained through intra prediction or inter prediction. The chroma reconstructed pixel C1 is the chroma reconstructed pixel in the chroma reconstructed image block obtained after in-loop filtering processing according to the present application. Luma reconstructed pixels L1 and L1' are located in the same luma reconstructed image block.

Optionally, when the processing device is an encoder, the determined filter coefficients can be entropy-encoded and encapsulated in a bitstream. When the processing device is a decoder, the filter coefficients corresponding to the reconstructed image blocks can be decoded from the bitstream for use in in-loop filtering.

Optionally, when the processing device is an encoder, the determined filter coefficients may not be entropy-encoded. When the processing device is a decoder, the corresponding filter coefficients can be determined from the reconstructed pixels in the reconstructed image blocks. The reconstructed image blocks include luma reconstructed image blocks and their corresponding chroma reconstructed image blocks, and the reconstructed pixels include luma reconstructed pixels in the luma reconstructed image block and chroma reconstructed pixels in the chroma reconstructed image block.

Optionally, after the processing device completes the prediction of the current image block, it can also perform encoding/decoding processing of the video image in units of encoding units (encoding units include one luma block and two chroma blocks), as shown in the in-loop filtering module in FIG. 6A or FIG. 6B. Specifically, in the in-loop filtering module, luma reconstructed image blocks and chroma reconstructed image blocks are obtained. Filter coefficients are determined based on a portion of the luma reconstructed pixels in the luma reconstructed image block and a portion of the chroma reconstructed pixels in the chroma reconstructed image block. Then, using these filter coefficients and the luma reconstructed pixels in the luma reconstructed image block, in-loop filtering is performed on the chroma reconstructed image block to obtain the filtered chroma reconstructed image block. Finally, the processing device can generate a chroma reconstructed image or a chroma decoded image based on the filtered chroma reconstructed image block.

Optionally, the method for dividing the reconstructed image block described above differs from the method for dividing the coding unit, prediction unit, and transform unit. Optionally, the size of the reconstructed image block can be larger than the size of the coding unit, prediction unit, and transform unit. Optionally, the reconstructed image block may include a reconstruction region located outside the coding unit and surrounding the coding unit.

In this embodiment, the image processing method can use the pixels of the first component as a reference to predict the pixels of the second component of the current image block during intra or inter prediction of the current image block. This takes into account the correlation between different components for prediction process, which can improve the prediction accuracy of images with strong correlation between the luma and chroma components during the prediction process, thereby further improving the compression rate of video data.

Fifth embodiment

In this embodiment, the image processing method is still described using a processing device as the execution entity. Based on any of the above embodiments, the image processing method may further include:
performing in-loop filtering based on the second pixel.

Optionally, after performing a second prediction process on the current image block to determine or obtain the second pixel (i.e., the luma prediction pixel value and/or chroma prediction pixel value) of the prediction block corresponding to the current image block, the processing device may further utilize the second pixel to determine the reconstructed image block corresponding to the current image block, and perform in-loop filtering on the reconstructed image block to obtain a filtered reconstructed image block. Finally, the processing device can generate a reconstructed image or a decoded image based on the filtered reconstructed image block.

Optionally, the reconstructed image block mentioned above can be a reconstructed image block corresponding to the current image block or the prediction block corresponding to the current image block.

Optionally, the reconstructed image block mentioned above can also be other reconstructed image blocks. Other reconstructed image blocks can be image blocks with different division methods than the current image block or the prediction block corresponding to the current image block. Optionally, other reconstructed image blocks can be reconstructed image blocks that are slightly larger than the current image block and include rows or columns of pixels surrounding the current image block.

Optionally, if the division method of the transform unit and the division method of the prediction unit of the current image block are different, and the sizes of the transform unit and the prediction unit are different due to the different division methods, then the reconstructed image block can be a reconstructed image block corresponding to the transform unit.

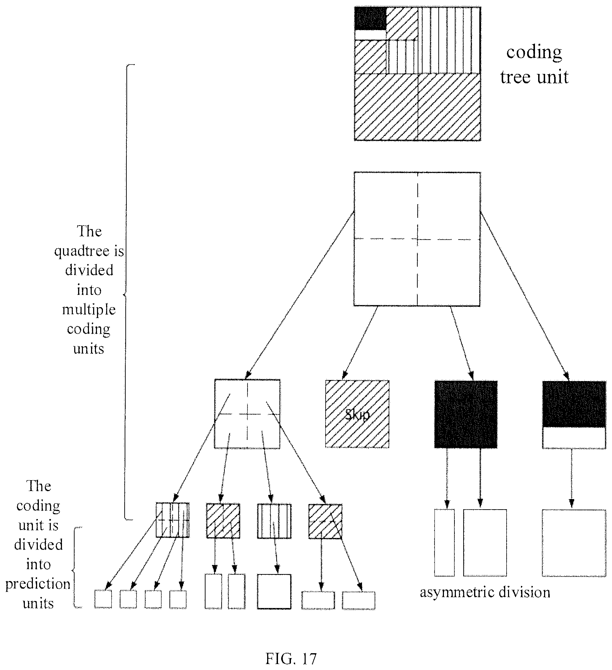

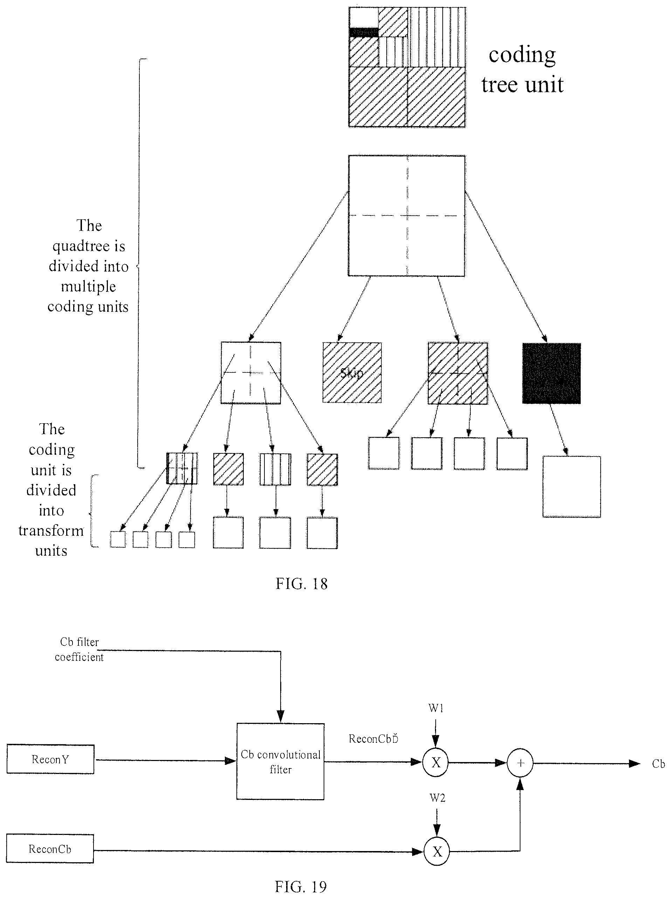

Optionally, the relationship between the current image block (i.e., the coding unit currently performing coding processing at the encoding end) and the corresponding prediction block (i.e., prediction unit and transform unit) can be as shown in FIG. 17 and FIG. 18. Optionally, the current image block (the coding unit illustrated) includes one luma block and two chroma blocks; the prediction unit includes one luma prediction block and two chroma prediction blocks; the transform unit includes one luma transform block and two chroma transform blocks. The prediction unit is the basic unit for performing prediction process, and the transform unit is the basic unit for performing transform, quantization/inverse transform, and inverse quantization processing.

Optionally, at the encoding end, the processing device divides the residual corresponding to the current image block into transform units, and then generates transform coefficients by transforming and quantizing the residuals. Therefore, before transforming and quantizing, the transform units store the residuals; after transforming and quantizing, the transform units store the transformed coefficients.

Optionally, at the decoding end, after reading the encoded transform coefficient information from the bitstream, the processing device can obtain the transform coefficients in the transform units using this information, and obtain the residuals by performing inverse transforming and inverse quantizing on the transform coefficients.

Optionally, the reconstructed image block obtained by the processing device during in-loop filtering can be a reconstructed image block with the same size as the current image block.

Optionally, the processing device can also use the luma reconstructed pixels and chroma reconstructed pixels determined for the second prediction process as "a portion of luma reconstructed pixels" and "a portion of chroma reconstructed pixels" for determining the filter coefficients, and determine the filter coefficients accordingly.

Optionally, as shown in FIG. 19, since the processing device has already completed the reconstruction of the current chroma pixels, the processing device does not involve processing the residuals during subsequent in-loop filtering.

Optionally, after determining the chroma reconstructed image block, the processing device can perform weighted processing on the filtered chroma reconstructed image block and the unfiltered chroma reconstructed image block using preset weighting coefficients to obtain a weighted chroma reconstructed image block for subsequent generation of a chroma reconstructed image or a chroma decoded image.

Optionally, the processing device can also employ secondary segmentation for prediction process and in-loop filtering processing of the current image block.

Optionally, after determining the reconstructed pixel value used to determine the filter coefficients, the processing device can also determine the reconstructed image block corresponding to that reconstructed pixel.

Optionally, the size of the reconstructed image block is the same as the size of the transform unit, and the reconstructed pixels in the reconstructed image block correspond to the residuals in the transform unit.

Optionally, the size of the reconstructed image block is the same as the size of the prediction unit (such as the prediction unit corresponding to the current image block when the processing device performs the first prediction process), and the reconstructed pixels in the reconstructed image block correspond to the predicted pixels in the predicted image block.

Optionally, the method of dividing the prediction unit in the first prediction process, the method of using the prediction unit to derive the reconstructed pixel or reconstructed image block, and the method of dividing the coding unit are referred to as the first division. That is, the first division can be a method of dividing the coding tree unit into coding units, a method of dividing the coding unit into prediction units, or a method of dividing the coding unit into transform units.

Optionally, the processing device performs a second prediction process on the current image block using a different division method than the first partitioning. That is, after determining the reconstructed image block corresponding to the coding tree unit, the coding unit, the prediction unit, or the transform unit, the processing device further partitions the determined reconstructed image block corresponding to the coding tree unit, the coding unit, the prediction unit, or the transform unit to obtain the reconstructed image block used in the second prediction process.

Optionally, the secondary division can be a method of further dividing the predicted image block (e.g., the prediction unit) into smaller predicted image blocks (e.g., smaller prediction units). The aforementioned predicted image block corresponds to the first prediction process, and the smaller predicted image block corresponds to the second prediction process.

Optionally, the secondary division can be a method of further dividing the reconstructed image block into smaller reconstructed image blocks. The predicted image block corresponding to the aforementioned reconstructed image block is the basic unit of the first prediction process mentioned in this embodiment, and the predicted image block corresponding to the smaller reconstructed image block is the basic unit of the second prediction process mentioned in this embodiment.

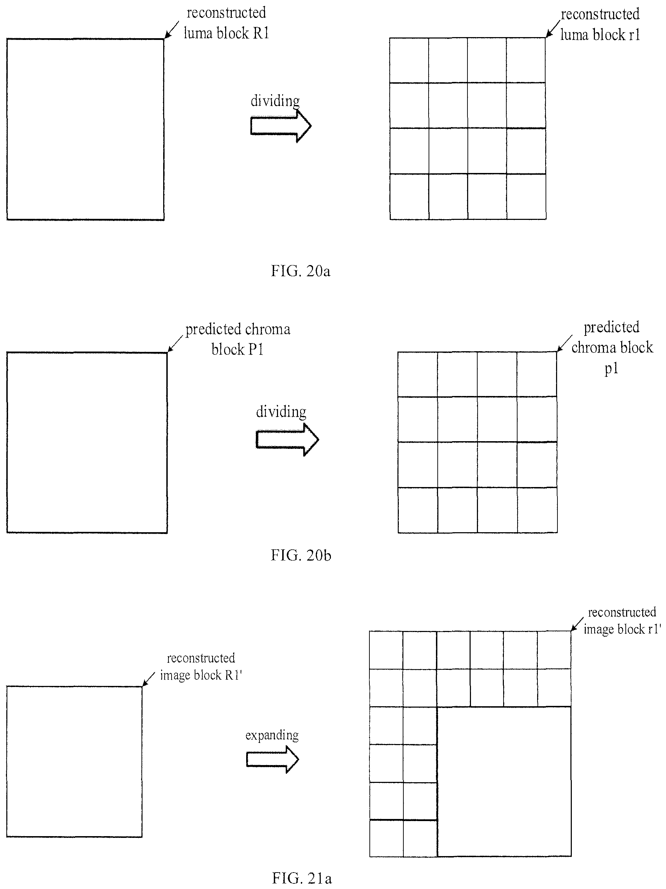

Optionally, assuming the processing device refers to the reconstructed image block corresponding to the coding tree unit, the reconstructed image block corresponding to the coding unit, the reconstructed image block corresponding to the prediction unit, or the reconstructed image block corresponding to the transform unit as reconstructed image block R1 (including luma reconstructed image block and chroma reconstructed image block), then as shown in FIG. 20a, the processing device can divide the reconstructed image block R1 into multiple smaller reconstructed image blocks r1 according to a preset rule and a fixed size. Then, a second prediction process or in-loop filtering process is performed using these multiple smaller reconstructed image blocks as units.

Optionally, the preset rule can be: dividing the reconstructed image block R1 into multiple reconstructed image blocks r1 of the same size.

Optionally, the reconstructed image block r1 after the above-mentioned secondary division can be the input reconstructed image block (such as the luma reconstructed image block) of the convolution filter shown in FIG. 9a to FIG. 9c.

Optionally, the reconstructed image block r1 after the above-mentioned secondary division can be the input reconstructed image block of the convolution filter shown in FIG. 16a.

Optionally, the reconstructed image block r1 after the above-mentioned secondary division can also be the input reconstructed image block of the convolution filter shown in FIG. 19.

In this embodiment, the processing device performs the above-mentioned secondary division in a way different from the first division to perform a second prediction on the reconstructed image block. Thus, the fine-grainedness of the second prediction performed by the processing device on the current image block is different from the first prediction process, thereby allowing the results of the two predictions performed by the processing device on the current image block to complement each other, which is beneficial to improving the accuracy of the prediction of the current image block.

Optionally, the above-described secondary division can also be used to predict image blocks (such as the predicted chroma image block P1 shown in FIG. 20b, or the predicted luma image block P2 (not shown in the figure)).

Optionally, the processing device can perform a secondary division on the predicted image block or prediction unit in the first prediction process in a manner similar to the method for dividing the reconstructed image block r1 described above, to obtain the divided prediction unit or predicted image block (such as the predicted chroma image block p1 shown in FIG. 20b). Then, the processing device selects or determines the luma pixel or chroma pixel for deriving the filter coefficients based on the divided prediction unit or prediction image block.

Optionally, the processing device performs a secondary division on the prediction unit P1 in the first prediction process to obtain prediction unit p1. Then, the luma pixel PredY1 and chroma pixel PredCr1 shown in FIG. 9a to FIG. 9c are determined based on the prediction unit p1.

In this embodiment, because the processing device employs a secondary division, it can obtain filter coefficients corresponding to more fine-grained prediction units, thereby improving the prediction accuracy for the current image block.

Optionally, if the processing device uses the above-described secondary division method for in-loop filtering, it helps to eliminate artifacts and improve the quality of the reconstructed image.

Optionally, in the in-loop filtering process, the processing device performs the above-described secondary division process on both the reconstructed luma block and the reconstructed chroma block.

Optionally, the processing device can also perform second prediction or in-loop filtering on reconstructed image blocks of other sizes.

Optionally, the processing device can use a different size for the second prediction process or subsequent in-loop filtering on the current image block than the image block or image unit involved in the first prediction process.

Optionally, after determining the reconstructed pixel values for determining the filter coefficients, the processing device can determine the reconstructed image block corresponding to the reconstructed pixels.

Optionally, the size of the reconstructed image block is the same as the size of the transform unit, and the reconstructed pixels in the reconstructed image block correspond to the residuals in the transform unit; or, the size of the reconstructed image block is the same as the size of the prediction unit (such as the prediction unit corresponding to the first prediction process performed by the processing device), and the reconstructed pixels in the reconstructed image block correspond to the predicted pixels in the prediction image block.

Optionally, the size of the prediction unit in the first prediction process, the size of the reconstructed pixel or image block derived from the prediction unit, and the size of the coding unit are referred to as the first size involved in the first prediction process. Unlike the first size, the image block or image unit involved in the second prediction process performed by the processing device uses a different size than the image block or image unit involved in the first prediction process, after determining the reconstructed image block corresponding to the coding tree unit, the coding unit, the prediction unit, or the transform unit, the determined reconstructed image block corresponding to the coding tree unit, the coding unit, the prediction unit, or the transform unit is further expanded to obtain the reconstructed image block used in the second prediction process.

Optionally, it is assumed that the processing device refers to the reconstructed image block corresponding to the coding tree unit, the reconstructed image block corresponding to the coding unit, the reconstructed image block corresponding to the prediction unit, or the reconstructed image block corresponding to the transform unit as a reconstructed image block R1' (including luma reconstructed image block and chroma reconstructed image block). As shown in FIG. 21a, according to a preset rule, the reconstructed image block R1' is expanded into a larger reconstructed image block r1'. Then, a second prediction process or in-loop filtering processing is performed on the basis of the reconstructed image block r1'.

Optionally, as shown in FIG. 21a, the preset rule is that the reconstructed image block r1 includes not only the reconstructed image block R1' but also one or more rows or columns of pixels located outside and surrounding the reconstructed image block R1' (e.g., above, below, to the left, and to the right).

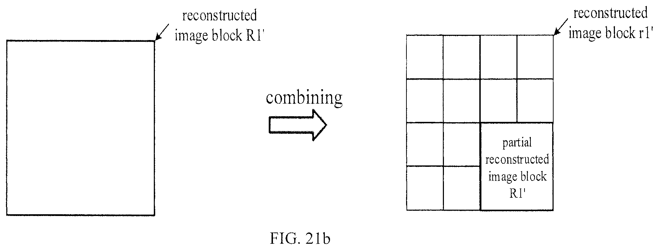

Optionally, as shown in FIG. 21b, the processing device reassembles the reconstructed image block R1' into the reconstructed image block r1' according to the preset rule. Then, a second prediction process or in-loop filtering process is performed on a per-reconstructed image block r1' basis. Optionally, as shown in FIG. 21b, the prediction rule can be that the reconstructed image block r1' includes a portion of the reconstructed image block R1' and one or more rows or columns of pixels surrounding that portion of the region (e.g., above, below, to the left, and to the right).

Optionally, the expanded/combined reconstructed image block r1' described above can be the input reconstructed image block of the convolutional filter shown in FIG. 9a to FIG. 9c.

Optionally, the expanded/combined reconstructed image block r1' described above can be the input reconstructed image block of the convolutional filter shown in FIG. 16a.

Optionally, the expanded/combined reconstructed image block r1' described above can also be the input reconstructed image block of the convolutional filter shown in FIG. 19.

In this embodiment, the processing device can facilitate a second prediction with reconstructed image blocks of different sizes or image content than those involved in the first prediction process. This allows the results of the two predictions to be complementary, which is beneficial for improving prediction accuracy.

Optionally, the reconstructed image block described above can be a brightness reconstructed image block.

Optionally, the above-described secondary division can also be used to predict image blocks.

Optionally, the processing device can expand/combine the predicted image block or prediction unit in the first prediction process in a manner similar to the method of expanding/combining the reconstructed image block r1' described above, to obtain an expanded/combined prediction unit or predicted image block, and then select or determine the luma pixel or chroma pixel for deriving the filter coefficients based on the expanded/combined prediction unit or predicted image block. Optionally, the processing device expands/combines the prediction unit P1' in the first prediction process and the prediction unit P1' to obtain the prediction unit p1'. Then, the luma pixel PredY1 and chroma pixel PredCr1 shown in FIG. 9a to FIG. 9c are determined on a unit basis of prediction unit p1'.

In this embodiment, because the processing device employs an expansion/combination method, the accuracy of prediction for the current image block can be improved. Here, the predicted image block can be a luma prediction image block or a chroma prediction image block. Optionally, if the processing device uses expanded/combined image blocks for in-loop filtering, it also helps eliminate artifacts and block artifacts, improving the quality of the reconstructed image. In this case, the processing device performs the in-loop filtering process by dividing the image into reconstructed luma blocks and reconstructed chroma blocks.

Embodiments of the present application further provide a processing device, including a memory and a processor. The memory stores an image processing program, and when the image processing program is executed by the processor, the steps of the image processing method in any of the above embodiments are implemented.

Embodiments of the present application further provide a storage medium storing an image processing program, and when the image processing program is executed by the processor, the steps of the image processing method in any of the above embodiments are implemented.

In the embodiments of the processing device and storage medium provided in the present application, all the technical features of any of the above-described image processing method embodiments may be included. The extended and explanatory content of the specification is basically the same as that of the embodiments of the above methods, and will not be repeated here.

Embodiment of the present application further provides a computer program product, which includes a computer program code, and when the computer program code is run on a computer, the computer executes the method in the above-mentioned various possible implementations.

Embodiments of the present application further provide a chip, including a memory and a processor, the memory is configured to store a computer program, and the processor is configured to call and run the computer program from the memory, so that the device equipped with the chip executes the method in the above-mentioned various possible implementations.

It can be understood that the above-mentioned scenarios are only examples and do not constitute a limitation on the application scenarios of the technical solutions provided in the embodiments of the present application. The technical solutions of the present application can also be applied to other scenarios. For example, it is known to ordinary technicians in the field that with the evolution of the system architecture and the emergence of new business scenarios, the technical solutions provided in the embodiments of the present application are also applicable to similar technical problems.

The serial numbers of the embodiments of the present application are for description only and do not represent the advantages and disadvantages of the embodiments.

The steps in the method of the embodiment of the present application can be adjusted in order, merged and deleted according to actual needs.

The units in the device of the embodiment of the present application can be merged, divided and deleted according to actual needs.

In the present application, the same or similar terminology, technical solution and/or application scenario description is generally described in detail only when it appears for the first time. When it appears again later, it is generally not repeated for the sake of brevity. When understanding the technical solution and other contents of the present application, for the same or similar terminology, technical solution and/or application scenario description that is not described in detail later, please refer to the previous related detailed description.

In the present application, the descriptions of various embodiments have different focuses. For parts that are not described or recorded in a certain embodiment, please refer to the relevant descriptions of other embodiments.

The various technical features of the technical solution of the present application can be combined arbitrarily. In order to make the description concise, all possible combinations of the various technical features in the above embodiments are not described. However, as long as there is no contradiction in the combination of these technical features, they should be considered to be within the scope of the present application.

Through the above description of the implementation, those skilled in the art can clearly understand that the above embodiment methods can be implemented by software plus the necessary general hardware platform, or by hardware, but in many cases the former is a better implementation. Based on this understanding, the technical solution of the present application essentially or the part that contributes to the existing technology can be embodied in the form of a software product, and the computer software product is stored in one of the above storage media (such as ROM/RAM, disk, optical disk), including several instructions to cause a terminal device (which can be a mobile phone, a computer, a server, a controlled terminal, or a network device, etc.) to execute the method of each embodiment of the present application.

The above embodiments can be implemented in whole or in part by software, hardware, firmware or any combination thereof. When implemented by software, it can be implemented in whole or in part in the form of a computer program product. The computer program product includes one or more computer instructions. When the computer program instructions are loaded and executed on the computer, the process or function according to the embodiment of the present application is generated in whole or in part. The computer can be a general-purpose computer, a special-purpose computer, a computer network, or other programmable device. The computer instructions can be stored in a computer-readable storage medium, or transmitted from one computer-readable storage medium to another computer-readable storage medium. For example, the computer instructions can be transmitted from one website, computer, server or data center to another website, computer, server or data center by wired (such as coaxial cable, optical fiber, digital subscriber line) or wireless (such as infrared, wireless, microwave, etc.) means. The computer-readable storage medium can be any available medium that can be accessed by the computer or a data storage device such as a server or data center that includes one or more available media integrated. The available medium can be a magnetic medium (such as a floppy disk, a storage disk, a tape), an optical medium (such as a DVD), or a semiconductor medium (such as a Solid State Disk (SSD)), etc.

The above are only some embodiments of the present application, and are not intended to limit the scope of the present application. Any equivalent structure or equivalent process transformation made using the contents of the specification and drawings of the present application, or directly or indirectly applied in other related technical fields, shall be similarly included in the scope of the present application.

**Claims**

1. An image processing method, **characterized in that** the method comprises:
   determining or obtaining a second pixel of a first component and/or a second pixel of a second component based on a first pixel of a first component of a current image block.

2. The method according to claim 1, further comprising at least one of the following:

   determining or obtaining the second pixel based on at least one of the following: a downsampling model, a non-downsampling model, a gradient model, a convolutional prediction model, and a linear prediction model, and the first pixel; and
   determining or obtaining the second pixel based on the first pixel and filter coefficients.

3. The method according to claim 2, wherein a method for determining the filter coefficients comprises at least one of the following:

   a first method: determining the filter coefficients based on a first reconstructed pixel of the first component, and a second reconstructed pixel of the first component and/or a second reconstructed pixel of the second component;
   a second method: determining the filter coefficients based on a first reconstructed pixel of the first component, and a second predicted pixel of the first component and/or a second predicted pixel of the second component; and
   a third method: determining the filter coefficients based on a first predicted pixel of the first component, and a second predicted pixel of the first component and/or a second predicted pixel of the second component.

4. The method according to claim 3, wherein the method further includes at least one of the following:

   the first reconstructed pixel is largest or smallest reconstructed pixel of the first component;
   the first reconstructed pixel is a reconstructed pixel determined within a predetermined region; and
   the first reconstructed pixel is largest or smallest reconstructed pixel of the first component within the predetermined region.

5. The method according to claim 4, wherein the method further includes at least one of the following:

   the first reconstructed pixel is different from the first pixel;
   the first predicted pixel is different from the first pixel;
   the first reconstructed pixel is the same as the first pixel; and
   the first predicted pixel is the same as the first pixel.

6. The method according to any one of claims 1 to 5, wherein a method for determining the first pixel comprises at least one of the following:

   determining the first pixel based on a third reconstructed pixel or a third predicted pixel of the first component;
   determining the first pixel based on a downsampled pixel of the third reconstructed pixel or the third predicted pixel; and
   determining the first pixel based on a fourth predicted pixel obtained by intra prediction or inter prediction of the current image block.

7. The method according to any one of claims 1 to 5, further comprising:

determining or obtaining a reconstructed image block corresponding to the current image block based on the second pixel; and
determining or obtaining a reconstructed pixel of the first component and/or a reconstructed pixel of the second component based on a reconstructed pixel of the first component of the reconstructed image block.

8. The method according to any one of claims 1 to 5, wherein the method further includes at least one of the following:

the first component is a luma component;
the second component is a chroma component;
the first pixel is the predicted pixel or the reconstructed pixel; and
the second pixel is the predicted pixel or the reconstructed pixel.

9. A processing device, **characterized in that** the processing device comprises: a memory and a processor, wherein the memory stores an image processing program, and when the processor executes the image processing program, the steps of the image processing method according to any one of claims 1 to 8 are implemented.

10. A storage medium, **characterized in that** the storage medium stores a computer program, and when a processor executes the computer program, the steps of the image processing method according to any one of claims 1 to 8 are implemented.

FIG. 1

FIG. 2

N

W C E

S

FIG. 3

| NW | N | NE |
|----|---|----|
| W | C | E |
| SW | S | SE |

FIG. 4

| L1 | L0 | L2 |
|----|----|----|
|    | C  |    |
| L4 | L3 | L5 |

FIG. 5

input video
data — transform — quantifica tion — entropy coding — bitstream

inverse quantification

inverse transform

intra prediction

inter prediction

predict data

decoding image buffer

loop filter

filter control data

FIG. 6A

bitstream — entropy coding — inverse quantification — inverse transform

predict data

intra prediction

inter prediction

loop filter

decoding image buffer — decoded video data

filter control data

FIG. 6B

determining or obtaining the second pixel of the first component and/or the second pixel of the second component based on the first pixel of the first component of the current image block

— S10

FIG. 7

current image block

luma pixel Y

chroma pixel C

FIG. 8a

luma pixel Y1

luma pixel Y2

current image block

chroma pixel C1

| ⊗ | X | ⊗ | X | ⊗ | X | ⊗ | X |
| ⊗ | X | ⊗ | X | ⊗ | X | ⊗ | X |
| ⊗ | X | ⊗ | X | ⊗ | X | ⊗ | X |
| ⊗ | X | ⊗ | X | ⊗ | X | ⊗ | X |
| ⊗ | X | ⊗ | X | ⊗ | X | ⊗ | X |
| ⊗ | X | ⊗ | X | ⊗ | X | ⊗ | X |
| ⊗ | X | ⊗ | X | ⊗ | X | ⊗ | X |
| ⊗ | X | ⊗ | X | ⊗ | X | ⊗ | X |

FIG. 8b

luma pixel Y11

luma pixel Y22

current image block

chroma pixel C11

luma pixel Y33

luma pixel Y44

| X | X | X | X | X | X | X | X |
| O | | O | | O | | O | |
| X | X | X | X | X | X | X | X |
| X | X | X | X | X | X | X | X |
| O | | O | | O | | O | |
| X | X | X | X | X | X | X | X |
| X | X | X | X | X | X | X | X |
| O | | O | | O | | O | |
| X | X | X | X | X | X | X | X |
| X | X | X | X | X | X | X | X |
| O | | O | | O | | O | |
| X | X | X | X | X | X | X | X |

FIG. 8c

ResY1

PredY1 → (+) → ReconY1

PredCr1 → filter coefficient derivation → Cr filter coefficient

FIG. 9a

ResY1

PredY1 → (+) → ReconY1

ResCr1

PredCr1 → (+) → ReconCr1 → filter coefficient derivation → Cr filter coefficient

FIG. 9b

PredY1 →

PredCr1 → filter coefficient derivation → Cr filter coefficient

FIG. 9c

| $Luma_2$ | $Luma_3$ | $Luma_4$ |
|----------|----------|----------|
| $Luma_5$ | $Luma_1$ | $Luma_6$ |
| $Luma_7$ | $Luma_8$ | $Luma_9$ |

FIG. 10

luma pixel y1

luma image block A1

luma pixel y1

luma pixel y1

FIG. 11a

luma pixel y2

luma image block A2

luma pixel y2

luma pixel y2

FIG. 11b

FIG. 11c

luma pixel y4

luma image block
A4

luma pixel y4

luma pixel y4

FIG. 12

luma image block

luma pixel y4

luma pixel y4

FIG. 13

FIG. 14

FIG. 15

FIG. 16a

FIG. 16b

FIG. 16c

coding
tree unit

The
quadtree is
divided
into
multiple
coding
units

Skip

The
coding
unit is
divided
into
prediction
units

asymmetric division

FIG. 17

coding
tree unit

The quadtree is divided into multiple coding units

The coding unit is divided into transform units

FIG. 18

Cb filter
coefficient

ReconY

Cb convolutional
filter

ReconCb͞b

W1

X

+

Cb

W2

ReconCb

X

FIG. 19

reconstructed
luma block R1

dividing

reconstructed
luma block r1

FIG. 20a

predicted chroma
block P1

dividing

predicted
chroma block
p1

FIG. 20b

reconstructed
image block R1'

expanding

reconstructed
image block r1'

FIG. 21a

reconstructed
image block R1'

combining

reconstructed
image block r1'

partial
reconstructed
image block
R1'

FIG. 21b

## INTERNATIONAL SEARCH REPORT

| International application No. |
|---|
| **PCT/CN2023/122754** |

### A. CLASSIFICATION OF SUBJECT MATTER

H04N 19/186(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; JPTXT; CNKI; IEEE: 第一像素, 当前像素, 参考像素, 第一采样, 参考采样, 待预测像素, 待预测采样, 第二像素, 跨分量, 编码, 解码, 亮度, 色度, 第一分量, 第二分量, 颜色分量, 预测, 重建, reference, current, sample, predict, code, decode, encode, luminance, luminosity, chroma, rebuild, reconstruct

### C. DOCUMENTS CONSIDERED TO BE RELEVANT

| Category* | Citation of document, with indication, where appropriate, of the relevant passages | Relevant to claim No. |
|---|---|---|
| X | CN 116456102 A (SHENZHEN TRANSSION HOLDINGS CO., LTD.) 18 July 2023 (2023-07-18) description, paragraphs [0033]-[0183], and figures 1-16 | 1-10 |
| X | WO 2023141781 A1 (GUANGDONG OPPO MOBILE TELECOMMUNICATIONS CORP., LTD.) 03 August 2023 (2023-08-03) description, page 2, line 36 to page 32, line 44, and figures 1-15 | 1-10 |
| X | CN 115834897 A (SHENZHEN TRANSSION HOLDINGS CO., LTD.) 21 March 2023 (2023-03-21) description, paragraphs [0057]-[0131], and figures 1-10 | 1-10 |
| A | CN 104702962 A (HUAWEI TECHNOLOGIES CO., LTD.) 10 June 2015 (2015-06-10) entire document | 1-10 |
| A | JP 2013150178 A (SHARP K.K.) 01 August 2013 (2013-08-01) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 May 2024** | **29 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/122754**

| Patent document cited in search report | | | Publication date (day/month/year) | Patent family member(s) | | | Publication date (day/month/year) |
|---|---|---|---|---|---|---|---|
| CN | 116456102 | A | 18 July 2023 | CN | 116456102 | B | 03 October 2023 |
| WO | 2023141781 | A1 | 03 August 2023 | None | | | |
| CN | 115834897 | A | 21 March 2023 | CN | 115834897 | B | 25 July 2023 |
| CN | 104702962 | A | 10 June 2015 | EP | 3258694 | A1 | 20 December 2017 |
| | | | | EP | 3258694 | A4 | 21 February 2018 |
| | | | | US | 2018007367 | A1 | 04 January 2018 |
| | | | | US | 10412393 | B2 | 10 September 2019 |
| | | | | WO | 2016138779 | A1 | 09 September 2016 |
| | | | | JP | 2018511227 | A | 19 April 2018 |
| | | | | KR | 20170122796 | A | 06 November 2017 |
| | | | | CN | 104702962 | B | 16 April 2019 |
| JP | 2013150178 | A | 01 August 2013 | JP | 5995448 | B2 | 21 September 2016 |